# EUROPÄISCHE PATENTSCHRIFT

(11) **EP 2 986 876 B1**
(45) Veröffentlichungstag und Bekanntmachung des Hinweises auf die Patenterteilung: **29.07.2020**
(21) Anmeldenummer: 13718317.4
(22) Anmeldetag: 19.04.2013
(51) Int. Cl.: F16K 15/03

(54) **EXPLOSIONSSCHUTZVENTIL**
EXPLOSION-PROOF VALVE
VANNE DE SÉCURITÉ ANTIDÉFLAGRANTE

(43) Veröffentlichungstag der Anmeldung: 24.02.2016
(73) Patentinhaber: Rico-Sicherheitstechnik AG, 9100 Herisau (CH)
(72) Erfinder: ZELLWEGER, Daniel, CH-9056 Gais (CH); ALOI, Giuseppe, Walter, CH-9443 Widnau (CH); OBERLIN, Pascal, CH-9450 Lüchingen (CH)
(74) Vertreter: Hepp Wenger Ryffel AG
(86) Internationale Anmeldenummer: PCT/EP2013/058153
(87) Internationale Veröffentlichungsnummer: WO 2014/169961

(56) Entgegenhaltungen:
- WO-A1-2010/130724
- WO-A2-2007/019560
- GB-A- 2 064 721
- US-A- 3 677 289
- US-A- 4 605 198
- US-A- 4 667 883
- US-A1- 2008 308 159

## Beschreibung

Die Erfindung betrifft ein Explosionsschutzventil, insbesondere eine Rückschlagklappe zur explosionstechnischen Entkopplung, zum Unterbrechen eines Fluidstroms, insbesondere in einer Rohrleitung, gemäss dem Oberbegriff des Anspruchs 1.

Derartige Explosionsschutzventile sind für den Einbau in Anlagen mit flüssigen oder gasförmigen Fluidströmen, insbesondere auch bei der pneumatischen Förderung von z.B. staubförmigem Gut, seit langem bekannt und gebräuchlich. Der Hauptzweck besteht darin, die Ausbreitung von Druck- und/oder Feuerwellen in wenigstens einer Richtung zu unterbrechen, um weitergehende Schäden an zumeist empfindlichen Anlageteilen zu verhindern. Die Explosionsschutzventile können dabei unterschiedliche Schliesskörper aufweisen, die als Hohlkörper, Klappen oder Schieber ausgebildet sind.

Bekannt sind einfache Klappenventile, wie sie z.B. in der DE 10 2007 010 060 B3 beschrieben sind. Diese weisen in einem Ventilgehäuse eine einseitig gelagerte Ventilklappe auf, die durch den Fluidstrom in einer Richtung geöffnet und bei einer Explosion durch den auftretenden Explosionsdruck in Gegenrichtung geschlossen ist. Dabei muss für die vollständig ausschwenkende Ventilklappe allerdings ausreichend Platz im Ventilgehäuse vorhanden sein, womit das Ventilgehäuse vergleichsweise viel Platz beansprucht. Ebenso muss ein hoher Betriebsdruck aufgebracht werden, um die Klappe in eine Betriebsstellung zu heben, was einen hohen Strömungswiderstand bedingt.

Aus der US 4,667,883 ist ein Ventil offenbart, das eine Ventilscheibe umfasst, die über zwei Vorsprünge in zwei L-Nuten in den Wänden eines Ventilgehäuses gelagert ist. Die Ventilscheibe ist exzentrisch so an den Nuten gelagert, dass im Falle eines Rückflusses des Fluidstroms die Ventilscheibe dazu tendiert, sich um die Schultern der L-Nuten zu drehen.

Ein weiteres Klappenventil ist in der WO 2010/130724 A1 beschrieben. Dieses Klappenventil weist einen gemäss der Rohrkrümmung gekrümmten Klappenteller auf, welcher vom Fluidstrom in einer Öffnungsrichtung zur Rohrwand hin angehoben wird. Im Explosionsfall wird der Klappenteller vom Explosionsdruck in Gegenrichtung in eine Schliessstellung bewegt. Das Klappenventil umfasst eine Verriegelungsvorrichtung, welche den Klappenteller in der Schliessstellung arretiert. Da die Verriegelungsvorrichtung im Fluidstrom angeordnet ist, kann es zu Verunreinigungen oder Abrasion des Verriegelungsmechanismus kommen. Damit kann ein erhöhter Wartungsaufwand zur Gewährleistung eines zuverlässigen Betriebs verbunden sein. Zudem weist der Klappenteller aufgrund der Krümmung eine vergleichsweise komplexe Konstruktion auf.

Allgemein besteht ein Nachteil bei bekannten Explosionsschutzventilen in einer zumeist komplexen Konstruktion, einer mangelnden Zuverlässigkeit der Arretierung des Klappentellers sowie einer ausreichend raschen Abdichtung in der Schliessstellung. Insbesondere für den Einsatz in pneumatischen Förderleitungen waren bisher keine wartungsarmen Ventile einfacher Bauart bekannt, welche mit ausreichender Zuverlässigkeit eine Schliessfunktion im Explosionsfall bereitstellen.

Es ist daher eine Aufgabe der Erfindung, die Nachteile des Standes der Technik zu überwinden. Insbesondere ist es eine Aufgabe der Erfindung, ein vielseitig anwendbares Explosionsschutzventil bereitzustellen, welches einen zuverlässigen Schutz im Explosionsfall bereitstellt. Zudem soll das Explosionsschutzventil eine einfache Konstruktion und eine Platz sparende Bauweise aufweisen. Ebenso soll das Explosionsschutzventil bei geringem Wartungsaufwand verschleissarm und wirtschaftlich im Betrieb sein sowie insbesondere einen geringen Strömungswiderstand im regulären Betrieb aufweisen.

Diese Aufgaben werden erfindungsgemäss durch die Merkmale des unabhängigen Anspruchs gelöst. Dieser betrifft ein Explosionsschutzventil, insbesondere eine Rückschlagklappe zur explosionstechnischen Entkopplung, zum Unterbrechen eines Fluidstroms, insbesondere in einer Rohrleitung, umfassend ein Ventilgehäuse mit einer Durchlassöffnung zum Durchtritt des Fluidstroms und einen bei der Durchlassöffnung angeordneten Ventilsitz. Weiter umfasst das Explosionsschutzventil einen Schliesskörper, insbesondere einen Klappenteller, mit einer Dichtfläche, wobei der Schliesskörper derart beweglich im Ventilgehäuse an einem Lager gelagert ist, dass er wenigstens zwischen einer Ruhelage, einer Betriebslage und einer Schliesslage beweglich ist. Dabei befindet sich der Schliesskörper bei Abwesenheit eines Fluidstroms in der Ruhelage, in der Betriebslage ist die Durchlassöffnung vom Schliesskörper freigegeben und in der Schliesslage die Durchlassöffnung vom Schliesskörper verschlossen, wobei der Schliesskörper mit der Dichtfläche am Ventilsitz anliegt. Der Schliesskörper ist dabei unter Einwirkung eines Betriebsdrucks in die Betriebslage bewegbar und unter Einwirkung von einem vom Betriebsdruck abweichenden Schliessdruck in die Schliesslage bewegbar, wobei der Schliesskörper, bevorzugt selbsttätig, mittels einer Verriegelungsvorrichtung in der Schliesslage arretierbar ist. Das erfindungsgemässe Explosionsschutzventil zeichnet sich dadurch aus, dass das Lager des Schliesskörpers derart ausgebildet ist, dass der Schliesskörper in einer Schliessrichtung aus der Betriebslage in die Schliesslage mittels einer Drehbewegung und einer Linearbewegung beweglich ist.

"Betriebsdruck" bezeichnet hierbei einen Druck, welcher vom Fluidstrom bei vorgesehenem Betrieb erzeugt wird. Der Betriebsdruck wird von dem Fluidstrom erzeugt, welcher typischerweise durch die Durchlassöffnung in das Ventilgehäuse strömt. Je nachdem wie der Betriebsdruck bemessen ist, gelangt der Schliesskörper in eine "Betriebslage". Betriebslage bezeichnet somit eine Vielzahl von möglichen Lagen des Schliesskörpers. Insbesondere können die Ruhelage und die Betriebslage zusammenfallen. Es ist grundsätzlich aber auch nicht ausgeschlossen, dass die Ruhelage mit der Schliesslage zusammenfällt.

Ein "Schliessdruck" bezeichnet einen Druck, welcher sich vom Betriebsdruck unterscheidet und welcher z.B. durch eine Explosionsdruckwelle in der Rohrleitung verursacht werden kann. Das Explosionsschutzventil ist bevorzugt derart ausgebildet, dass eine resultierende Kraftwirkung des Betriebsdrucks auf den Schliesskörper einer resultierenden Kraftwirkung des Schliessdrucks weitgehend entgegengesetzt ist.

"Linearbewegung" bezeichnet vorliegend eine geradlinige Bewegung, bei der alle Punkte des Schliesskörpers zueinander parallele, geradlinige Bahnen durchlaufen (Translationsbewegung). Selbstverständlich können dabei sekundäre Abweichungen z.B. infolge Deformationen des Schliesskörpers aufgrund mechanischer Belastung auftreten.

"Drehbewegung" kann vorliegend z.B. eine Rotation um eine durch den Schliesskörper hindurch tretende geometrische Drehachse bezeichnen aber auch eine Drehung um eine ausserhalb des Schliesskörpers liegende Drehachse. Die vorliegende Drehbewegung versteht sich bezüglich einer geometrischen Achse, welche zu einer primären Strömrichtung geneigt ist, insbesondere weitgehend quer dazu ausgerichtet ist. Insbesondere ist die geometrische Achse parallel zu einer Ebene des Ventilsitzes angeordnet.

Das Lager des Schliesskörpers kann auf vielfältige Weise ausgebildet sein, um die erfindungsgemässe Beweglichkeit bereitzustellen. Denkbar sind beispielsweise Kurvenführungen, welche den Schliesskörper in einer Schliessrichtung aus der Betriebslage in die Schliesslage in der Drehbewegung und der Linearbewegung führen. Das Lager kann dabei z.B. eine Kurvenscheibe umfassen, welche diese Beweglichkeit steuert. Ebenso können Kurvenführungen z.B. an Wänden des Ventilgehäuses angeordnet sein, welche den Schliesskörper direkt oder indirekt auf Kurvenbahnen und/oder geradlinigen Bahnen führen. Das Lager kann aber auch reine Rotationslager umfassen, welche z.B. auf einem längsverschiebbaren Wagen angeordnet sind. Eine Steuerung der Beweglichkeit kann dabei z.B. über Steuerkurve oder eine Kurvenscheibe erfolgen. Das Lager kann den Schliesskörper sowohl in einer überlagerten Dreh- und Linearbewegung als auch in einer sequenziellen Abfolge dieser Bewegungen führen.

Bevorzugt ist das Explosionsschutzventil derart ausgebildet, dass die Schliessbewegung, d.h. der Übergang von der Betriebsstellung in die Schliessstellung selbsttätig erfolgt, wenn ein Schliessdruck auftritt. Das Explosionsschutzventil ist dabei in der Regel derart ausgebildet und zum Einbau vorgesehen, dass der Schliesskörper aufgrund der Schwerkraftwirkung aus der Betriebslage in die Ruhelage gelangt. Typischerweise ist der Fluidstrom im Explosionsschutzventil dabei horizontal ausgerichtet. Dabei kann der Schliesskörper in Abwesenheit des Fluidstroms z.B. aufgrund der Schwerkraftwirkung in die Ruhelage gelangen. Selbstverständlich sind auch Ausführungsformen des Explosionsschutzventils denkbar, bei welchen ein Fluidstrom vertikal oder in beliebiger Richtung ausgerichtet sein kann. In diesem Fall, aber auch im Falle einer horizontalen Ausrichtung, kann eine Stellvorrichtung vorhanden sein, welche den Schliesskörper im regulären Betrieb in Abwesenheit des Fluidstroms in die Ruhelage stellt. Ebenso sind Stellvorrichtungen denkbar, welche einen Übergang des Schliesskörpers in die Betriebslage unterstützen, um z.B. den Strömungswiderstand des Explosionsschutzventils zu reduzieren. Derartige Stellvorrichtungen können z.B. Federelemente umfassen, welche beispielsweise direkt oder indirekt über einen Achskörper am Schliesskörper angreifen oder am Lager ausgebildet sind.

Indem der Schliesskörper zumindest in der Schliessrichtung in einer Linearbewegung und in einer Drehbewegung beweglich gelagert ist, kann eine Schliessbewegung des Schliesskörpers zum Verschliessen der Durchlassöffnung z.B. hinsichtlich einer Schliesszeit und einem Schliessweg optimiert werden. Insbesondere kann der Schliesskörper in einer Endphase der Schliessbewegung in Schliessrichtung in einer reinen Linearbewegung an den Ventilsitz angelegt werden. Auf diese Weise ist eine möglichst gleichzeitige und damit sichere Abdichtung der Durchlassöffnung gewährleistet.

Der Schliesskörper kann aufgrund der zusätzlichen Beweglichkeit in einer Drehbewegung aus einer Betriebsstellung in die Schliessstellung gelangen, welche nicht durch die Linearbewegung alleine vorgegeben ist. Auf diese Weise kann der Schliesskörper in der Betriebsstellung z.B. aus dem Fluidstrom ausgeschwenkt sein oder, für einen verminderten Strömungswiderstand, längs einer Strömrichtung ausgerichtet sein, wobei das lineare Anlegen an den Ventilsitz nicht beeinträchtigt ist. Insbesondere kann der Schliesskörper aufgrund der Linearbewegung in der Ruhelage und/oder in der Betriebslage von der Durchlassöffnung weg verschoben sein. Auf diese Weise kann der Schliesskörper in der Betriebsstellung z.B. teilweise in die Durchlassöffnung eingeschwenkt sein, ohne am Ventilsitz anzustossen, was bei einer reinen Drehbewegung nicht möglich wäre. Auf diese Weise ergibt sich eine besonders kompakte Bauweise des Explosionsschutzventils.

Es versteht sich, dass eine Bewegung entgegen der Schliessrichtung, d.h. z.B. aus der Schliessstellung oder aus der Ruhelage in die Betriebsstellung dem entsprechenden Bewegungsabschnitt der Schliessbewegung in umgekehrter Richtung entsprechen kann.

Die Linearbewegung und die Drehbewegung erfolgen sequenziell, d.h. aufeinander folgend.

Das Lager ist daher derart ausgebildet, dass der Schliesskörper zum Übergang aus der Betriebslage in die Schliesslage zunächst in der, insbesondere reinen, Drehbewegung und in der Folge in der, insbesondere reinen, Linearbewegung beweglich ist. Die Schliessbewegung ist somit in einen ersten Bewegungsabschnitt und einen zweiten Bewegungsabschnitt unterteilt. Auf diese Weise ist sichergestellt, dass der Schliesskörper in der Endphase der Schliessbewegung in einer linearen Bewegung mit der Dichtfläche an den Ventilsitz anlegbar ist. Dabei ist bevorzugt die Richtung der Linearbewegung parallel zur primären Strömrichtung des Fluidstroms bei vorgesehenem Betrieb ausgerichtet. Dabei kann eine Lage des Schliesskörpers beim Übergang von der Drehbewegung zur Linearbewegung der Ruhelage entsprechen. Ein Übergang von der Ruhelage in die Betriebslage kann somit in einer, insbesondere reinen, Drehbewegung erfolgen. Mit anderen Worten ist der Schliesskörper in diesem Fall in Schliessrichtung nur in der Linearbewegung aus der Ruhelage beweglich und bevorzugt in einer Öffnungsrichtung nur in der Drehbewegung.
Dabei können die Dichtfläche des Schliesskörpers und der Ventilsitz eben ausgebildet und zueinander planparallel, insbesondere voneinander beabstandet, ausgerichtet sein, wenn der Schliesskörper in der Linearbewegung beweglich ist. Auf diese Weise ist sichergestellt, dass die Dichtfläche gleichmässig, insbesondere am gesamten Umfang der Durchlassöffnung weitgehend gleichzeitig, an den Ventilsitz anlegbar ist. Insbesondere sind die Dichtfläche des Schliesskörpers und der Ventilsitz sowohl in der Ruhelage als auch in der Schliesslage planparallel zueinander ausgerichtet.

Der Schliesskörper ist über einen Achskörper an dem Lager gelagert. Auf diese Weise kann das Lager von einem Strömbereich beabstandet und ausserhalb eines primären Fluidstroms im Ventilgehäuse angeordnet sein. Bevorzugt ist dabei ein zweites, spiegelbildlich ausgebildetes Lager vorhanden, wobei die beiden Lager beidseitig der Durchlassöffnung parallel zueinander angeordnet sind, wobei der Schliesskörper an beiden Lagern gelagert ist. Auf diese Weise ist sichergestellt, dass der Schliesskörper auch bei gross dimensionierten Ausführungen des Explosionsventils sicher gelagert ist und z.B. eine einseitige Verwindung aufgrund einer Explosionsdruckwelle reduziert bzw. vermieden werden kann.

Das Lager umfasst eine Drehführung sowie eine Linearführung für einen starr mit dem Schliesskörper verbundenen Steuerkörper. Damit kann eine Steuerung der einzelnen Bewegungsabschnitte der Schliessbewegung über den Steuerkörper erfolgen, welcher vom Schliesskörper beabstandet z.B. im oder beim Lager angeordnet sein kann. Der Steuerkörper ist über den Achskörper am Schliesskörper starr mit diesem verbunden. Das Lager umfasst bevorzugt einen monolithischen Lagerkörper, in welchem die Führungen ausgebildet sind.
Als Drehführung wird hierbei jede Art von Führung verstanden, welche den Steuerkörper in einer Dreh-, Kurven- oder Rotationsbewegung führt. Insbesondere können diese ein Rotationslager, aber z.B. auch eine Kurvenführung, umfassen, in welcher der Steuerkörper auf einer gekrümmten Bahnkurve geführt ist. Als Linearführung wird jede Art von Führung verstanden, in welcher der Steuerkörper auf einer geradlinigen Bahn geführt ist. Die Drehführung oder Linearführung kann jeweils eine Zwangsführung bereitstellen, d.h. nur einen Freiheitsgrad der Bewegung des Steuerkörpers zulassen. Die Führungen können aber auch nach Art einer einseitigen Steuerfläche mehrere Freiheitsgrade zulassen. Eine allenfalls gewünschte Zwangsführung kann sich in diesem Fall z.B. infolge Zusammenwirkens mehrerer Führungen des Lagers ergeben.

Indem die Steuerung der Beweglichkeit des Schliesskörpers am Lager über einen Steuerkörper erfolgt, sind keine besonderen konstruktiven Massnahmen am Schliesskörper selbst erforderlich. Selbstverständlich kann in Varianten eine Steuerung der Schliessbewegung auch direkt am Schliesskörper erfolgen.

Da der Steuerkörper über den Achskörper starr mit dem Schliesskörper verbunden ist, ist der Steuerkörper bevorzugt zentrisch bezüglich des Achskörpers angeordnet. Eine zentrische Anordnung bezeichnet hierbei z.B. eine Anordnung, bei welcher eine Längsachse des Achskörpers durch einen Schwerpunkt des Steuerkörpers geht. Der Steuerkörper kann dabei z.B. als länglicher, weitgehend prismatischer Körper ausgebildet sein, welcher quer zur Längsachse des Achskörpers angeordnet ist. Aufgrund der zentrischen Anordnung kann das Lager kompakt ausgebildet werden, da eine Drehbewegung des Steuerkörpers möglichst wenig Platz beansprucht. Damit ist nicht zuletzt auch eine erhöhte Sicherheit durch eine geringere mechanische Belastung aufgrund kürzerer wirksamer Hebelarme verbunden.

Selbstverständlich kann je nach Erfordernis der Steuerkörper in Varianten auch exzentrisch, z.B. vom Achskörper beabstandet, angeordnet sein und z.B. in einer Kurvenführung auf einer Bahnkurve geführt sein. Der Steuerkörper kann dabei z.B. ein einfacher Führungsbolzen sein, welcher in der Kurvenführung geführt ist.

Grundsätzlich lässt sich auf einfache Weise eine kombinierte Linear und Drehführung umsetzten, indem z.B. eine runder Achskörper in einem Langloch geführt ist. Auf diese Weise ist eine gleichzeitige Drehbarkeit und Verschiebbarkeit des Achskörpers und damit des Schliesskörpers gewährleistet. Vorliegend stellen Linearbewegung und Drehbewegung jedoch bevorzugt voneinander getrennte, sequenziell ausführbare Bewegungsabschnitte der Schliessbewegung dar. Hierzu ist es vorteilhaft, Linearführung und Drehführung derart auszubilden, dass der Steuerkörper in einer der Führungen drehbar geführt und in der anderen Führung geradlinig bewegbar geführt ist. Dabei ist ein Übergang des Steuerkörpers von der einen in die andere Führung nur in einer vorgegebenen Stellung des Schliesskörpers möglich. Selbstverständlich können die Führungen dabei für eine kompakte Bauweise überlagert ausgebildet sein, wobei z.B. Elemente der einen Führung in einer Doppelfunktion als Elemente der anderen Führung bereitstellen.

Bevorzugt sind die Drehführung und die Linearführung derart ausgebildet und zueinander angeordnet, dass der Steuerkörper nur in einer vorgegebenen Drehstellung aus der Drehführung in die Linearführung einbringbar ist. Auf diese Weise ist sichergestellt, dass der starr mit dem Steuerkörper verbundene Schliesskörper in einer vorgegebenen Lage ist, wenn er geradlinig verschiebbar sein soll z.B. um an den Ventilsitz angelegt zu werden.

Die Drehführung kann hierzu eine Aussparung aufweisen, in welcher der Steuerkörper, in radialer und/oder in axialer Richtung geführt, zumindest teilweise um eine von der Drehführung definierte geometrische Drehachse drehbar ist. Bei zentrischer Anordnung des Steuerkörpers am Achskörper fällt die von der Drehführung definierte geometrische Drehachse in der Regel mit der Längsachse des Achskörpers zusammen, wenn sich der Steuerkörper in der Drehführung befindet. Indem der Steuerkörper sowohl in axialer und radialer Richtung geführt ist, ergibt sich aufgrund der Drehführung nur eine Drehbewegung als einziger Bewegungsfreiheitsgrad. Die Aussparung erlaubt somit eine kompakte Bauweise des Lagers.

Konkret ist die Aussparung mit Vorteil bezüglich der geometrischen Drehachse in radialer Richtung zumindest teilweise von kreiszylindrischen Mantelflächenabschnitten mit einem Krümmungsradius begrenzt, welcher einer halben radialen Dimension des Steuerkörpers entspricht. Dimensionsentsprechungen verstehen sich vorliegend jeweils unter Einbeziehung eines Toleranzwertes, welcher eine geführte Beweglichkeit des Steuerkörpers erlaubt. Die Mantelflächenabschnitte sind bevorzugt bezüglich der von der Drehführung definierten geometrischen Drehachse gegenüberliegend angeordnet. Auf diese Weise wird erreicht, dass die Mantelflächenabschnitte radiale Führungsflächen für die Drehbewegung des Steuerkörpers bilden.

Die Linearführung umfasst mit Vorteil einen Nutabschnitt, welcher in radialer Richtung an die Aussparung anschliesst und in welche der Steuerkörper in der Verschieberichtung der Linearführung aus der Aussparung der Drehführung verschiebbar ist. Selbstverständlich kann die Linearführung auch unabhängig von der Ausbildung der Drehführung als Nutabschnitt ausgebildet sein. Der Steuerkörper weist bevorzugt wenigstens einen als prismatischer Körper ausgebildeten Abschnitt auf, mit welchem er in den Nutabschnitt einbringbar ist. Ein Querschnitt des prismatischen Abschnitts entspricht dabei bevorzugt einem Querschnitt der Nut, sodass der Steuerkörper als Schlitten zumindest teilweise im Nutabschnitt geradlinig geführt verschiebbar ist.

Bevorzugt ist der gesamte Steuerkörper als länglicher, weitgehend prismatischer Körper ausgebildet. Endseitige Stirnflächen des Steuerkörpers können dabei gekrümmt ausgebildet sein, um z.B. eine geeignete Gleitfläche zum Abgleiten an den Mantelflächenabschnitten der Drehführung zu bilden. Selbstverständlich kann der Steuerkörper stirnseitig auch jeweils ein Wälzlager aufweisen, mit welchem er mit verringertem Widerstand auf den Mantelflächenabschnitten abrollen kann.

Zur Begrenzung der Drehbarkeit des Steuerkörpers ist mit Vorteil in der Aussparung wenigstens ein Anschlagselement mit einer Anschlagsfläche ausgebildet, welche die Drehbewegung des Steuerkörpers in der Aussparung derart begrenzt, dass der Steuerkörper in die Linearführung verschiebbar ist, wenn er an der Anschlagsfläche anliegt. Bevorzugt fluchtet die Anschlagsfläche dabei mit einer Führungsfläche des Nutabschnitts, sofern die Linearführung als Nutabschnitt ausgebildet ist. Die Führungsfläche des Nutabschnitts setzt sich in diesem Fall als Anschlagsfläche in die Aussparung fort. Die Führungsfläche und die Anschlagsfläche bilden somit gesamthaft eine einseitige Führungsfläche für den Steuerkörper, längs welcher er aus der Drehführung in die Linearführung verschoben werden kann. Die Anschlagsfläche bildet somit einen Drehbegrenzer der Drehführung und gleichzeitig eine Führungsfläche der Linearführung. Drehführung und Linearführung sind in diesem Fall teilweise überlagert ausgebildet.

Bevorzugt ist ein weiterer Anschlag mit einer weiteren Anschlagsfläche in der Aussparung angeordnet, welche bezüglich der geometrischen Drehachse der Drehführung achssymmetrisch angeordnet ist. Die beiden Anschlagsflächen sind dabei derart angeordnet, dass der Steuerkörper in der entsprechenden Drehstellung an beiden Anschlagsflächen anliegt. Insbesondere fluchtet die weitere Anschlagsfläche gegebenenfalls mit einer weiteren Führungsfläche des Nutabschnitts. Auf diese Weise ist sichergestellt, dass der Steuerkörper zum Einbringen in die Linearführung ausgerichtet ist, wenn er an der Anschlagsfläche bzw. den Anschlagsflächen anliegt.

Je nach Anforderung bildet die Anschlagsfläche mit Vorteil ein Gleitlager für den Steuerkörper. Hierbei kann es von Vorteil sein, wenn der Steuerkörper z.B. aus einem weichern Material gefertigt ist, als die Anschlagsfläche. Beispielsweise kann nach Art bekannter Gleitlager der Steuerkörper aus Messing oder Bronze gefertigt sein, während die Anschlagfläche einen Stahl umfasst. Eine Ausbildung des Steuerkörpers aus derartigen Materialien kann auch nur im Zusammenhang mit einem stirnseitigen Abgleiten an den Mantelflächenabschnitten vorteilhaft sein, welche z.B. ebenfalls aus Stahl gefertigt sein können.

Bei gewissen Anwendungen, z.B. aufgrund gross dimensionierter Schliesskörper bei z.B. grossen Rohrdurchmessern, können hohe Reibungskräfte zwischen Anschlagsfläche und Steuerkörper auftreten, welche eine zuverlässige Schliessbewegung aufgrund des Schliessdrucks auf den Schliesskörper verhindern. In diesem Fall kann es von Vorteil sein, wenn an der Anschlagsfläche ein Wälzlager für den Steuerkörper angeordnet ist. Auf diese Weise kann sichergestellt werden, dass der Steuerkörper mit möglichst geringem Widerstand in die Linearführung einbringbar ist. Während für gewisse Anwendungen an der Anschlagsfläche drehbar gelagerte Wälzkörper wie z.B. Rollen ausreichen können, kann es für einen besonders geringen Widerstand vorteilhaft sein, das Wälzlager mit mehreren mit einem Wälzkörperkäfig in einem Wälzbett angeordneten Wälzkörpern auszubilden. Das Wälzkörperbett ist hierbei bevorzugt an der Anschlagsfläche ausgebildet und derart bemessen, das eine ausreichende Verschiebbarkeit des Wälzkörperkäfigs gewährleistet ist. In diesem Fall ist der Steuerkörper bevorzugt aus einem ausreichend harten Material gefertigt, insbesondere aus gehärtetem Stahl, um einen Verschleiss aufgrund des Wälzlagers zu vermindern. Im Falle der weiteren Anschlagsfläche kann diese analog ausgebildet sein, mit anderen Worten als Gleitlager ausgebildet sein oder ein Wälzlager umfassen.

Das Lager umfasst zusätzlich eine Längsführung, in welcher der Achskörper drehbar und verschiebbar geführt ist, wobei eine Verschieberichtung der Längsführung parallel zu der Verschieberichtung der Linearführung für den Steuerkörper ist. Die Längsführung des Achskörpers kann dabei als einfaches Langloch am Lagerkörper ausgebildet sein. Auf diese Weise kann der Steuerkörper entlastet werden, da die Längsführung über den Achskörper einen Teil der auf den Schliesskörper wirkenden Kräfte und Momente aufnehmen kann. Ebenso kann aufgrund der zusätzlichen Längsführung erreicht werden, dass die Drehführung und/oder die Linearführung des Steuerkörpers als einfache Steuerfläche ausgebildet sein können und sich gesamthaft dennoch eine Zwangsführung ergibt.
Um den Schliesskörper in der Schliessstellung zu arretieren, weist das Explosionsschutzventil erfindungsgemäss eine Verriegelungsvorrichtung auf. Derartige Verriegelungsvorrichtungen können vielfältig ausgebildet sein wie z.B. als einfache, selbsttätig oder gesteuerte Riegel, welche direkt auf den Schliesskörper wirken. Mit Vorteil umfasst die Verriegelungsvorrichtung jedoch einen selbsthemmenden Mechanismus, welcher eine Bewegung entgegen der Schliessrichtung selbsttätig hemmt.

Bevorzugt umfasst die Verriegelungsvorrichtung hierzu einen Freilauf, welcher die Beweglichkeit des Schliesskörpers in Schliessrichtung erlaubt und in Gegenrichtung sperrt, zumindest wenn der Schliesskörper in der Schliessstellung ist. Als Freilauf wird hierbei eine Vorrichtung verstanden, welche in einer Bewegungsrichtung eine weitgehend freie Beweglichkeit gewährleistet, während in einer anderen Bewegungsrichtung die Beweglichkeit gesperrt ist. Vorliegend kann der Freilauf derart ausgebildet sein, dass der Schliesskörper in der Schliessstellung oder aber auch bereits in einer Endphase der Schliessbewegung in einer Bewegungsrichtung entgegen der Schliessrichtung gesperrt ist. Bevorzugt ist der Freilauf ausserhalb des primären Fluidstroms angeordnet. Der Freilauf kann hierzu z.B. gegebenenfalls direkt auf den Achskörper wirken.

Bevorzugt ist der Freilauf jedoch am Lager ausgebildet und wirkt zur Arretierung des Schliesskörpers, direkt oder indirekt, auf den Steuerkörper. Der Freilauf kann somit als integraler Bestandteil des Lagers ausgebildet sein, was konstruktiv und wartungsmässig vorteilhaft ist. Insbesondere kann der Freilauf beispielsweise in die Drehführung oder die Linearführung integriert sein.

Mit Vorteil ist der Freilauf an der Linearführung ausgebildet und umfasst einen in einem Sperrkörperbett angeordneten Sperrkörper, insbesondere einen Rollkörper, welcher zwischen dem Steuerkörper und dem Sperrkörperbett verkeilbar ist, wenn der Steuerkörper entgegen der Schliessrichtung in der Linearführung verschoben wird. Auf diese Weise ist sichergestellt, dass der Steuerkörper vom Freilauf gesperrt ist, sobald er ausreichend weit in die Linearführung gelangt ist. Der Freilauf umfasst als Sperrkörperbett bevorzugt eine, bezüglich der Verschieberichtung der Linearführung, schiefe Ebene, auf welcher ein federbeaufschlagter Rollkörper, insbesondere eine Kugel, als Sperrkörper angeordnet ist. Die schiefe Ebene ist derart ausgerichtet, dass sie in Schliessrichtung von der Verschieberichtung weg bzw. in Gegenrichtung zu dieser hin geneigt ist. Die schiefe Ebene ist derart bezüglich der Linearführung angeordnet, dass je nach Lage des Rollkörpers dieser vollständig ausserhalb der Linearführung oder in diese hineinreichend angeordnet sein kann. Derartige Freiläufe sind beispielsweise bei Fahrrädern als Klemmrollen-Freiläufe bekannt.

In Varianten kann der Freilauf z.B. auch als Sperrklinken-Freilauf ausgebildet sein, wobei in diesem Fall der Steuerkörper besonders ausgebildet sein muss, während beim Klemmrollen-Freilauf eine, in der Regel ohnehin vorhandene, Klemmfläche am Steuerkörper ausreicht. Je nach Material des Steuerkörpers kann für einen verringerten Verschleiss ein Einsatz z.B. aus gehärtetem Stahl als Klemmfläche am Steuerkörper ausgebildet sein, damit der Rollkörper bei mehrmaligem Sperren nicht in den Steuerkörper eingräbt. Selbstverständlich kann Sperrkörper und Sperrkörperbett auch am Steuerkörper ausgebildet sein, was in der Regel aber konstruktiv aufwändiger ist.

Zum Lösen der Arretierung ist der Freilauf bevorzugt an einem Lagerschuh ausgebildet, welcher in einer Löserichtung, insbesondere in Richtung der Verschieberichtung der Linearführung, verschiebbar im Lager angeordnet ist. Da der Freilauf einen selbsthemmenden Mechanismus bereitstellt, bedarf es in der Regel einer Änderung der Lastverhältnisse, um die einmal erstellte Arretierung freizugeben. Dies kann vorliegend über den verschiebbaren Lagerschuh erreicht werden. Aufgrund der Verschiebung des Lagerschuhs ist der Sperrkörper in einen Bereich des Sperrkörperbetts bringbar, in welchem die arretierende Klemmwirkung vermindert oder aufgelöst ist. Damit ist eine Beweglichkeit des Schliesskörpers entgegen der Schliessrichtung ermöglicht, womit der Schliesskörper z.B. aus der Schliesslage in die Ruhelage gebracht werden kann. Es versteht sich, dass der Lagerschuh hierzu in einer entsprechend ausgebildeten Verschiebeführung am Lager, insbesondere am Lagerkörper ausgebildet ist.

Mit Vorteil ist der Lagerschuh derart ausgebildet, dass er einen Teil der Linearführung, insbesondere gegebenenfalls eine Führungsfläche des Nutabschnitts, und/oder einen Teil der Drehführung, insbesondere gegebenenfalls einen der beiden Mantelflächenabschnitte, umfasst.

Indem der Lagerschuh gleichzeitig Elemente der Drehführung und/oder der Linearführung umfasst, kann das Lager besonderes kompakt gestaltet werden. Bevorzugt sind eine Führungsfläche des Nutabschnitts sowie eine der Mantelflächenabschnitte der Aussparung der Drehführung vollständig am Lagerschuh ausgebildet. Auf diese Weise kann vermieden werden, dass es bei Flächenübergängen zu Ungenauigkeiten aufgrund von Fertigungstoleranzen kommen kann bzw. ein erhöhter Aufwand erforderlich ist, um diese Ungenauigkeiten zu vermeiden.

Mit Vorteil ist das Sperrkörperbett am Lagerschuh angeordnet, insbesondere gegebenenfalls an einer Führungsfläche des Nutabschnitts. Auf diese Weise können der Sperrkörper sowie ein Federelement am Lagerschuh angeordnet sein und braucht nicht aufwändig z.B. in den Steuerkörper integriert zu werden.

Um eine Verschiebung des Lagerschuhs in einer Löserichtung (oder gegebenenfalls in Gegenrichtung) zu erreichen, kann das Lager eine Gewindespindel umfassen, welche sowohl am Lagerschuh und am Lager um ihre Längsachse drehbar derart abgestützt ist, dass bei einer Drehung um die Längsachse der Lagerschuh zumindest in der Löserichtung (oder gegebenenfalls in Gegenrichtung) verschiebbar ist. Selbstverständlich sind auch andere Betätigungsvorrichtungen denkbar, über welche der Lagerschuh verschoben werden kann. Eine Gewindespindel hat jedoch den Vorteil, dass über das Gewinde eine vergleichsweise grosse Kraft ausgeübt werden kann, welche zum Lösen des Freilaufs z.B. aufgrund einer starken Verkeilung des Sperrkörpers oft erforderlich ist. Bevorzugt ist die Gewindespindel am Lager, insbesondere am Lagerkörper, über ein Gewinde abgestützt. Die Gewindespindel kann z.B. durch das Ventilgehäuse nach aussen geführt sein und manuell oder maschinell angetrieben betätigt werden, um eine Arretierung durch die Verriegelungsvorrichtung zu lösen. Am Lagerschuh ist die Gewindespindel bevorzugt über einen Drehsitz abgestützt, in welche die Spindel um ihre Längsachse zwar frei drehbar ist, in Längsrichtung aber abgestützt ist.

Hierzu ist die Gewindespindel bevorzugt über ein Mitnehmerelement drehbar am Lagerschuh abgestützt, welches lose in eine Aussparung des Lagerschuhs eingesetzt ist. Auf diese Weise wird der Zusammenbau des Lagers vereinfacht, da das Mitnehmerelement nur eingelegt zu werden braucht und in komplett montiertem Zustand des Lagers von einer Führung für den Lagerschuh in der Aussparung gehalten ist.

Im Explosionsschutzventil kann eine Überwachungsvorrichtung vorhanden sein, mit welcher eine momentane Lage des Schliesskörpers, insbesondere die Ruhelage und/oder die Schliesslage, überwachbar ist. Die Überwachungsvorrichtung kann dabei grundsätzlich zur direkten Überwachung des Schliesskörpers selbst ausgebildet sein. Bevorzugt erfolgt die Überwachung allerdings indirekt gegebenenfalls z.B. über den starr mit dem Schliesskörper verbundenen Achskörper und/oder Steuerkörper. Auf diese Weise kann die Überwachungsvorrichtung ausserhalb eines primären Fluidstroms, insbesondere am Lager angeordnet sein. Grundsätzlich ist es nicht erforderlich, sämtliche möglichen Lagen des Schliesskörpers zu überwachen. Zugunsten einer vereinfachten Konstruktion kann die Überwachungsvorrichtung nur vereinzelte Lagen überwachen. Bevorzugt ist dies die Ruhelage, um festzustellen, ob der Schliesskörper bei fehlendem Betriebsdruck korrekt in die Ruhelage gelangt. Ebenso bevorzugt ist auch eine Schliesslage überwachbar, um das korrekte Schliessen im Explosionsfall zu überwachen. Insbesondere kann bei einer Abweichung von einer vorgesehenen Lage z.B. ein Verschmutzungsgrad des Explosionsschutzventils z.B. aufgrund angelagerten Förderguts ermittelt werden.

Mit Vorteil umfasst die Überwachungsvorrichtung einen mechanischen Messfühler, welcher insbesondere am Lager ausgebildet ist, der je nach Lage des Schliesskörpers in unterschiedliche Messpositionen bringbar ist. Der mechanische Messfühler ist dabei, bevorzugt gegebenenfalls vom Steuerkörper, in eine erste Messposition bringbar, wenn der Schliesskörper in der Ruhelage ist, und in eine zweite Messposition bringbar, wenn der Schliesskörper in der Messstellung ist. Eine Ruhposition des Messfühlers kann dabei einer weiteren Messposition entsprechen, welche z.B. anzeigt, ob der Schliesskörper in einer Betriebslage ist. Der Messfühler ist dabei bevorzugt zumindest teilweise in einem Übergangsbereich von der Drehführung zur Linearführung des Lagers angeordnet, um gegebenenfalls sowohl eine Drehstellung des Steuerkörpers in der Drehführung als auch eine Verschiebestellung in der Linearführung erfassen zu können. Bevorzugt ragt der Bolzen gegebenenfalls in den Nutabschnitt der Linearführung bis hin zur Aussparung der Drehführung.

Indem der mechanische Messfühler vorgesehene Messpositionen einnimmt, kann von einer Abweichung dieser Positionen z.B. ein Verschmutzungsgrad des Explosionsschutzventils ermittelt werden. Beispielsweise kann der Ventilsitz und/oder der Schliesskörper an der Dichtfläche Anlagerungen von z.B. Fördergut aufweisen, welche verhindern, dass er in die Ruhelage und/der die Schliesslage gelangt. Diese Abweichung kann am Messfühler aufgrund einer Abweichung von der entsprechenden Messposition auf einfache Weise abgelesen werden. Allgemein können auf diese Weise Rückschlüsse auf eine Funktionsintegrität des Explosionsschutzventils gezogen werden.

Der mechanische Messfühler kann einen am Lager gegen eine Federkraft auslenkbaren Bolzen umfassen, welcher vorzugsweise von zwei in Serie geschalteten Federelemente mit unterschiedlicher Federkraft beaufschlagt ist. Indem der mechanische Messfühler als Bolzen ausgebildet ist, können die unterschiedlichen Messpositionen z.B. durch eine unterschiedliche Auslenkung in Längsrichtung des Bolzens bereitgestellt sein. Mit den in Serie geschalteten Federelementen können dabei unterschiedliche Federkräfte für die einzelnen Messpositionen bereitgestellt werden. Der Bolzen kann z.B. aus dem Ventilgehäuse nach aussen geführt sein, wo eine Messvorrichtung eine Auslenkung des Bolzens misst. Dabei können z.B. elektromechanische, induktive oder optische Sensoren zum Einsatz kommen.

Erfindungsgemäss weist das Explosionsschutzventil eine vom Schliesskörper verschliessbare Durchlassöffnung für den Fluidstrom auf. Diese kann grundsätzlich z.B. in einer Aussenwand des Gehäuses ausgebildet sein. Bevorzugt ist die Durchlassöffnung jedoch als endseitige Öffnung eines wenigstens teilweise im Ventilgehäuse angeordneten Rohrstutzens ausgebildet, wobei eine im Ventilgehäuse angeordnete Stirnfläche des Rohrstutzens den Ventilsitz bildet. Der Ventilsitz ist bevorzugt eben ausgebildet. Der Rohrstutzen im Inneren des Ventilgehäuses kann eine Fortsetzung eines äusseren Rohrstutzens mit Anschlussflansch zum Anschluss des Explosionsschutzventils an die Rohrleitung sein.

Mit Vorteil ist der Schliesskörper als, insbesondere wenigstens einseitig ebener, bevorzugt weitgehend scheibenförmiger, Klappenteller ausgebildet. Als Klappenteller kann der Schliesskörper platzsparend und leicht ausgebildet sein. Indem er einseitig eben ausgebildet sein kann, weist er eine ebene Schliessfläche zum Verschliessen der Durchlassöffnung auf. Die Dichtfläche des Schliesskörpers ist bevorzugt an oder bei der ebenen Seite des Klappentellers ausgebildet.

Bevorzugt liegt der Ventilsitz in einer Ebene, welche gegenüber einer Längsrichtung des Rohrstutzens geneigt ist, wobei insbesondere der Rohrstutzen einen kreisförmigen Querschnitt aufweist und der Klappenteller der Durchlassöffnung entsprechend elliptisch ausgebildet ist. Auf diese Weise kann ein Schliessweg des Klappentellers verringert werden, da der Ventilsitz zur primären Strömrichtung hin geneigt ist, gemäss welchem sich der Klappenteller unter Einwirkung des Betriebsdrucks weitgehend ausrichtet.

In einer bevorzugten Ausführungsform, bei welcher der Schliesskörper über einen Achskörper an dem Lager gelagert ist und der Klappenteller wenigstens einseitig eben ausgebildet ist, ist der Achskörper aus der Ebene des Klappentellers hinaus und von einem Mittelpunkt zum Rand des Klappentellers hin versetzt an diesem angeordnet. Dabei ist der Achskörper bevorzugt parallel zu einer Ebene des Klappentellers angeordnet. Eine derart doppelt exzentrische Anordnung hat mehrere Vorteile.

Beispielsweise kann, indem der Achskörper von einem Mittelpunkt zum Rand des Klappentellers hin versetzt an diesem angeordnet ist (1. Exzenterlage), sichergestellt werden, dass bei einem wirkenden Druck wie z.B. dem Betriebsdruck oder dem Schliessdruck zu beiden Seiten des Achskörpers eine unterschiedliche resultieren Kraft auf den Schliesskörper wirkt. Auf diese Weise wirkt bezüglich der vom Achskörper definierten geometrischen Drehachse ein Drehmoment auf den Schliesskörper. Bevorzugt ist der Achskörper bezüglich einer Richtung der Schwerkraftwirkung nach oben vom Mittelpunkt weg versetzt angeordnet. Auf diese Weise ist sichergestellt, dass der Klappenteller unter Einwirkung des Betriebsdrucks von der Durchlassöffnung her ausschwenkt und sich zur primären Strömrichtung hin ausrichtet. Ebenso ist sichergestellt, dass der Klappenteller bei fehlendem Betriebsdruck sich aufgrund der Schwerkraftwirkung zu einer Vertikalen hin ausrichtet. Im Explosionsfall ist ebenfalls sichergestellt, dass der Klappenteller unter Einwirkung des Schliessdrucks in Schliessrichtung geschwenkt wird.

Zudem kann, indem der Achskörper aus der ebenen Seite des Schliesskörpers hinaus versetzt angeordnet ist (2. Exzenterlage), eine durchgehende Dichtfläche bereitgestellt werden, welche nicht vom Achskörper durchbrochen ist, wie es in der Regel bei einer zentrischen Anordnung des Achskörpers der Fall wäre. Der Ventilsitz sowie die Dichtfläche können somit beide durchgehend ausgebildet sein. Auf diese Weise kann eine besonders gute Schliesswirkung des Schliesskörpers am Ventilsitz sichergestellt werden.

Mit Vorteil ist der Achskörper parallel zur Ebene des Klappentellers abgeflacht ausgebildet. Damit kann der Strömungswiderstand deutlich verringert werden. Dabei kann der Klappenteller für eine verbesserte mechanische Stabilität Versteifungsrippen aufweisen, welche sich senkrecht zum Achskörper längs des Klappentellers erstrecken.

Das Explosionsschutzventil kann an der Dichtfläche des Schliesskörpers und/oder am Ventilsitz ein Dichtelement umfassen. Auf diese Weise kann sichergestellt werden, dass in der Schliesslage eine ausreichende Dichtigkeit gewährleistet ist. Dies kann insbesondere bei gasförmigen Fluidströmen vorteilhaft oder gar erforderlich sein.

Bevorzugt ist die Dichtfläche des Schliesskörpers an einer umlaufenden elastischen Dichtlippe, insbesondere an einer Federstahllippe, ausgebildet. Bevorzugt steht die elastische Dichtlippe randseitig derart über einen Grundkörper des Schliesskörpers über, dass in der Schliessstellung nur die Dichtlippe am Ventilsitz anliegt. Auf diese Weise kann der Grundkörper des Schliesskörpers aufgrund der elastischen Eigenschaften der Dichtlippe unter der Einwirkung des Schliessdrucks in die Durchlassöffnung hinein gedrückt werden, wobei die Dichtlippe dichtend auf den Ventilsitz gepresst wird. Die Dichtlippe kann je nach Anwendung grundsätzlich aus jedem elastischen Material gefertigt sein. Bevorzugt wird die Dichtlippe jedoch von einer Federstahllippe bereitgestellt, welche im Explosionsfall eine hohe mechanische Stabilität bei ausreichenden elastischen Eigenschaften bereitstellt.

Mit Vorteil umfasst der Klappenteller mehrere Materiallagen, insbesondere eine zwischen zwei Stahllagen angeordnete Federstahllage, welche Materiallagen abschnittweise gegeneinander verschiebbar miteinander verbunden sind. Eine derartige Anordnung der Materiallagen erlaubt eine zumindest abschnittweise Verschiebung der einzelnen Materiallagen gegeneinander. Auf diese Weise wird, analog einer Blattfeder mit mehreren Federlagen, eine gewisse Elastizität des Klappentellers erreicht. Die Materiallagen sind bevorzugt zu einer Ebene des Klappentellers parallel angeordnet.

Bevorzugt ragt die Federstahllage randseitig über die Stahllagen hinaus und bildet die erwähnte Federstahllippe. Die Stahllagen bilden in diesem Fall Teile des Grundkörpers des Klappentellers.

Der Schliesskörper kann eine besondere Form aufweisen, mit welcher im Fluidstrom ein dynamischer Auftrieb erzeugbar ist. Auf diese Weise lässt sich insbesondere ein Übergang in die Betriebsstellung unterstützen, um einen Strömungswiderstand zu vermindern. Bevorzugt weist der Schliesskörper hierzu eine gewölbte Oberfläche nach Art eines Flügelprofils auf, mit welcher im Fluidstrom ein dynamischer Auftrieb auf den Klappenteller erzeugbar ist. Die gewölbte Oberfläche kann, insbesondere im Falle eines Klappentellers, als gewölbter Aufsatz ausgebildet sein. Allenfalls vorhandene Versteifungsrippen und/oder der Achskörper können dabei vom Aufsatz ganz oder teilweise überdeckt sein. Bei entsprechender Ausbildung des Aufsatzes sind je nachdem keine Versteifungsrippen erforderlich, da der Aufsatz selbst die nötige mechanische Stabilität des Schliesskörpers, insbesondere des Klappentellers, bereitstellen kann.

Bevorzugt ist am Explosionsschutzventil eine Sicherheitsstütze vorhanden, welche das Lager, insbesondere einen Lagerkörper des Lagers, im Explosionsfall, zusätzlich zu einer für einen vorgesehenen Betrieb vorhandenen Befestigung, am Ventilgehäuse abstützt. Auf diese Weise kann die für den Betrieb vorgesehene Befestigung verhältnismässig gering dimensioniert sein, da im Explosionsfall ein wesentlicher Teil der auftretenden Belastung des Lagers von der Sicherheitsstütze auf das Ventilgehäuse abgeleitet wird. Die Sicherheitsstütze kann dabei erst aufgrund der Belastung im Explosionsfall mit dem Lager zusammenwirken.

Die Erfindung wird im Folgenden anhand von Abbildungen exemplarischer Ausführungsbeispiele näher erläutert. Es zeigen schematisch:
- Fig. 1:: eine Darstellung eines erfindungsgemässen Explosionsschutzventils;
- Fig. 2:: einen Längsquerschnitt einer konkreten Ausführungsform eines erfindungsgemässen Explosionsschutzventils;
- Fig. 3:: eine Draufsicht auf das Explosionsschutzventil gemäss Fig. 2 in geöffnetem Zustand von oben her;
- Fig. 4a:: eine Schrägansicht des Explosionsschutzventils gemäss Fig. 2;
- Fig. 4b:: eine Schrägansicht des Explosionsschutzventils gemäss Fig. 2 mit teilweise ausgeblendeten Elementen;
- Fig. 5:: eine Querschnittsansicht eines Klappentellers eines erfindungsgemässen Explosionsschutzventils;
- Fig. 6:: eine Prinzipskizze eines Lagers für ein erfindungsgemässes Explosionsschutzventil;
- Fig. 7:: eine konkrete Umsetzung des Lagers gemäss Funktionsprinzip der Fig. 6 in einem Längsquerschnitt;
- Fig. 8:: ausgewählte Elemente des Explosionsschutzventils gemäss Fig. 2, wobei der Klappenteller in einer Betriebslage angeordnet ist;
- Fig. 9a:: eine weitere Prinzipskizze eines Lagers für ein erfindungsgemässes Explosionsschutzventil;
- Fig. 9b:: eine konkrete Umsetzung des Lagers gemäss Funktionsprinzip der Fig. 9a in einem Längsquerschnitt;
- Fig. 10:: zeigt eine weitgehend der Fig. 8 entsprechende Ansicht des Explosionsschutzventils, wobei der Klappenteller in der Ruhelage angeordnet ist und einen Profilkörper aufweist.

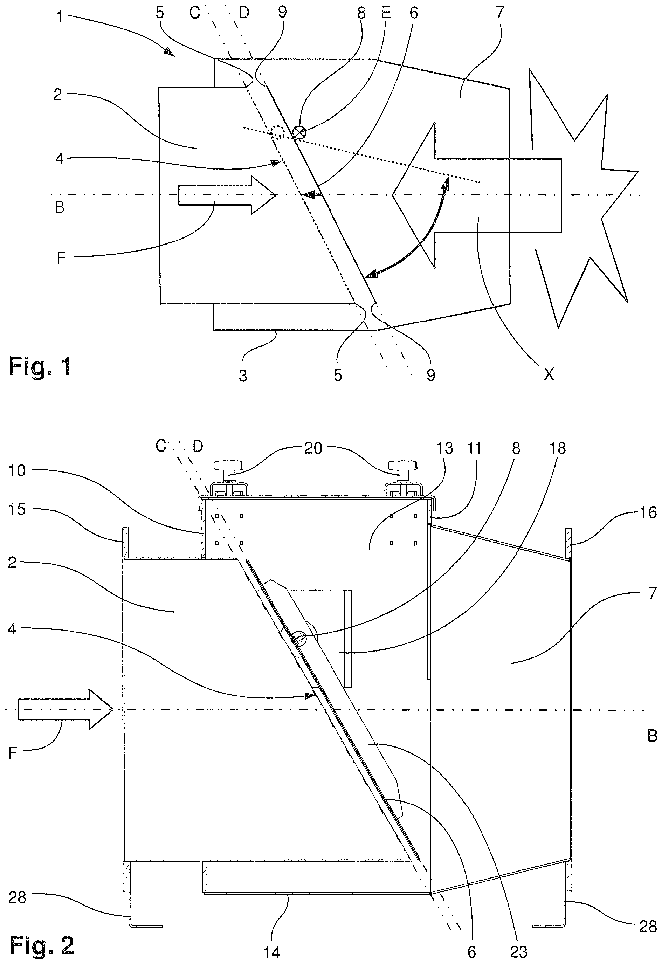

Figur 1 zeigt eine schematische Darstellung eines erfindungsgemässen Explosionsschutzventils 1 zur Illustration eines Funktionsprinzips in einem Längsquerschnitt in einer Längsebene A. Die Längsebene A umfasst dabei eine Längsrichtung B des Ventils 1.

Die Längsrichtung B ist dabei als Längsrichtung eines stromaufwärts angeordneten Rohrabschnitts 2 definiert, durch welchen im regulären Betrieb ein Fluidstrom F in ein Ventilgehäuses 3 des Ventils 1 einströmt. Die Längsrichtung B entspricht somit einer primären Strömrichtung. Innerhalb des Ventilgehäuses 3 endet der Rohrabschnitt 2 an einer Durchlassöffnung 4, an welcher der Rohrabschnitt 2 zum Inneren des Ventilgehäuses 3 hin offen ist. Eine Stirnseite des Rohrabschnitts 2 ist in einer Ebene C angeordnet und bildet einen Ventilssitz 5 für einen als Klappenteller 6 ausgebildeten Schliesskörper.

Die Ebene C ist gegenüber der Längsrichtung B geneigt und steht senkrecht zur Längsebene A. Der Rohrabschnitt 2 ragt somit mit seinem innenseitigen Längsende unterschiedlich weit in das Ventilgehäuse 3 hinein. In betriebsbereitem Zustand ist das vorliegend beschriebene Ventil 1 derart ausgerichtet, dass der am weitesten in das Ventilgehäuse 3 hineinragende Bereich des Rohrabschnitts 2 bezüglich einer Schwerkraftrichtung unten angeordnet ist. Eine Vertikale liegt in diesem Fall in der Längsebene A, während die Längsrichtung B und damit auch der primäre Fluidstrom F horizontal ausgerichtet sind. Es versteht sich, dass die Öffnungsebene C in anderen Ausführungsformen auch senkrecht zur Längsrichtung B angeordnet sein kann bzw. auch die Längsrichtung B und damit die primäre Strömrichtung des Fluidstroms F in einer anderen Richtung bezüglich der Schwerkraftrichtung ausgerichtet sein kann. In diesem Fall, wie auch im Falle der vorliegend beschriebenen horizontalen Ausrichtung, können eine oder mehrere zusätzliche Stellvorrichtungen vorhanden sein, welche den Klappenteller 6 in Abwesenheit des Fluidstroms F, z.B. mittels Federelementen, in die Ruhelage stellen und/oder ein Ausschwenken des Klappentellers 6 in die Betriebslage unterstützen.

Stromabwärts des Rohrabschnitts setzt sich das Ventilgehäuse 3 in einen Rohrverjünger 7 fort. Der Rohrverjünger 7 wirkt als Trichter, welcher den durch die Durchlassöffnung 4 in das Ventilgehäuse 3 eintretenden Fluidstrom F sammelt. Zudem wird der Fluidstrom F durch den Rohrverjünger 7 wieder auf den ursprünglichen Rohrdurchmesser verjüngt.

Ein Achskörper 8, an welchem der Klappenteller 6 fest angebracht ist, ist senkrecht zur Längsebene A angeordnet und der Durchlassöffnung 4 stromabwärts vorgelagert. Der Klappenteller 6 ist dabei doppelt exzentrisch am Achskörper 8 befestigt. Zum einen ist der Achskörper 8 von einem Mittelpunkt des Klappentellers nach oben versetzt an diesem angebracht (1. Exzenterlage). Zum anderen verläuft der Achskörper 8 ausserhalb einer Tellerebene D des Klappentellers 6 (2. Exzenterlage).

In einer Ruhelage ist der Klappenteller 6 der Durchlassöffnung 4 vorgelagert im Ventilgehäuse 3 angeordnet. Dabei ist die Tellerebene D parallel zur Öffnungsebene C angeordnet. Eine Dichtfläche 9 des Klappentellers 6 ist vom Ventilsitz 5 beabstandet angeordnet (durchgezogen dargestellt).

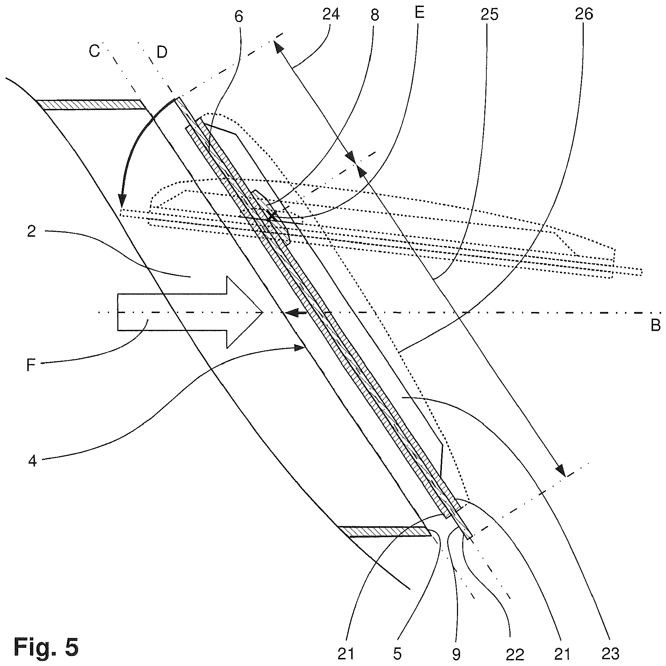

Unter der Einwirkung eines Betriebsdrucks, welcher vom Fluidstrom F im regulären Betrieb erzeugt wird, kann der Klappenteller 6 in einer Öffnungsrichtung um eine vom Achskörper 8 definierte geometrische Drehachse E ausschwenken (gestrichelt dargestellt). Aufgrund des Abstandes des Klappentellers 6 von der Durchlassöffnung 4 in der Ruhelage kann der Klappenteller 6 mit einem oberen Tellerbereich 24 oberhalb des Achskörpers 8 teilweise in die Durchlassöffnung 4 einschwenken (siehe hierzu auch Fig. 5). Auf diese Weise kann das Ventil 1 eine kurze Baulänge in Richtung von B aufweisen. Je nach Betriebsdruck kann der Klappenteller 6 dabei unterschiedliche Betriebsstellungen einnehmen. Ein unterer Tellerbereich 25 (siehe hierzu z.B. Fig. 5) kann dabei im Ventilgehäuse 3 verschwenkt werden und in der Betriebsstellung z.B. bis in den Rohrverjünger 7 ragen. Die Drehbewegung beim Ausschwenken ist bevorzugt derart beschränkt, dass der Klappenteller 6 sich nicht vollständig parallel zum Fluidstrom F ausrichten kann. Auf diese Weise ist sichergestellt, dass bei einem Schliessdruck in Gegenrichtung ein ausreichendes Drehmoment bezüglich der Drehachse E auf den Klappenteller 6 wirkt, um eine Schliessbewegung einzuleiten.

Erfolgt stromabwärts eine Explosion, kann eine Explosionsdruckwelle X einen dem Betriebsdruck entgegen gesetzten Schliessdruck auf den Klappenteller 6 ausüben. Der Schliessdruck bewirkt eine Schliessbewegung in Schliessrichtung. In der Betriebsstellung ist die Beweglichkeit des Klappentellers 6 auf eine reine Drehbewegung um die geometrische Achse E beschränkt. Aufgrund der ersten exzentrischen Anordnung des Achskörpers 8 am Klappenteller 6 erzeugt der Schliessdruck ein resultierendes Drehmoment, welches den Klappenteller 6 aus der Betriebslage in die Ruhelage zurückschwenkt. In der Ruhelage ist die Drehbewegung in Schliessrichtung beschränkt, sodass der Klappenteller 6 in Schliessrichtung mit dem unteren Tellerbereich 25 nicht weiter zur Durchlassöffnung 4 hinschwenken kann.

Aus der Ruhelage ist der Klappenteller 6 in Schliessrichtung nur in einer Linearbewegung verschiebbar. Der Schliessdruck bewirkt somit eine Linearverschiebung des Klappentellers 6 zusammen mit dem Achskörper 8 zur Durchlassöffnung 4 hin. Der Klappenteller 6 wird somit in einer zweiten Phase der Schliessbewegung aus der Ruhelage in einer reinen Linearbewegung in Richtung von B an den Ventilsitz 5 angelegt. Aufgrund der zweiten Exzenterlage des Achskörpers 8 kann sowohl der Ventilsitz 5 wie auch die Dichtfläche 9 durchgehend ausgebildet sein, ohne dass Freiräume zur Aufnahme des Achskörpers 8 vorgesehen sein müssen. Liegt der Klappenteller 6 mit der Dichtfläche 9 am Ventilsitz 5 an, ist eine Schliesslage erstellt, in welcher die Durchlassöffnung 4 vom Klappenteller 6 verschlossen ist. Der Schliessdruck presst dabei den Klappenteller mit der Dichtfläche 9 fest in bzw. auf den Ventilsitz 5.

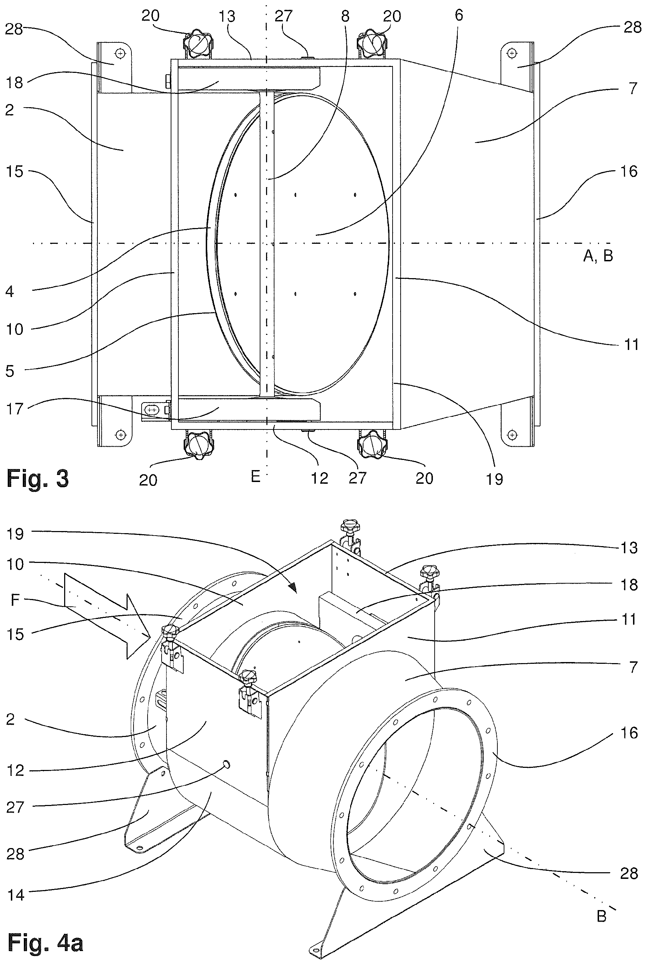

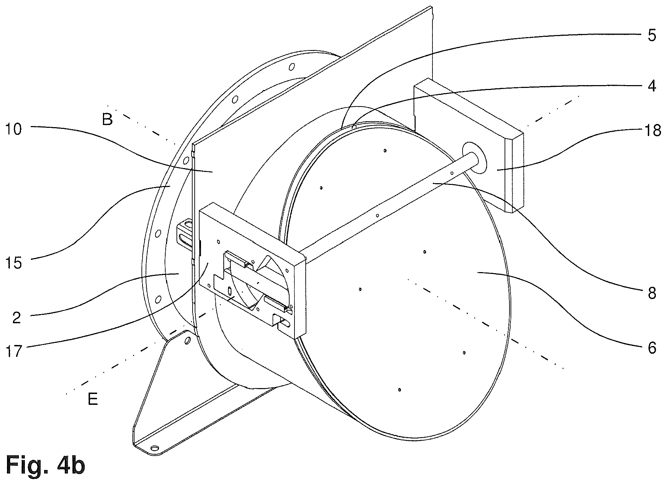

Figur 2 zeigt einen Längsquerschnitt in der Längsebene A einer konkreten Ausführungsform des erfindungsgemässen Explosionsschutzventils 1. Figur 3 zeigt eine Draufsicht auf das Ventil 1 von oben, während Fig. 4a eine Schrägansicht zeigt und Fig. 4b eine Schrägansicht mit teilweise ausgeblendeten Elementen. Im Folgenden sind die Fig. 2 bis 4b gemeinsam beschrieben.

In Längsrichtung B ist das Ventilgehäuse 3 von einer stromaufwärts angeordneten ebenen Stirnwand 10 und einer stromabwärts angeordneten ebenen Stirnwand 11 begrenzt. Die Stirnwände 10 und 11 sind senkrecht zur Längsebene A angeordnet. Die Stirnwände 10 und 11 sind in Längsrichtung B über parallel zur Längsebene A angeordnete ebene Seitenwände 12 und 13 verbunden. An einer Unterseite des Ventilgehäuses 3 sind die Stirnwände 10 und 11 sowie die Seitenwände 12 und 13 über einen bezüglich B halbkreiszylindrischen Mantelflächenabschnitt 14 verbunden. Ein Krümmungsradius des Mantelflächenabschnitts 14 entspricht dem an das Ventilgehäuse 3 anschliessenden Radius des Rohrverjüngers 7, welcher an der Unterseite bündig in den Mantelflächenabschnitt 14 übergeht.

Das Ventilgehäuse 3 ist somit in Längsrichtung B weitgehend prismatisch mit weitgehend konstantem, U-förmigem Querschnitt ausgebildet. Bezüglich der Längsebene A ist das Ventilgehäuse 3 im Wesentlichen spiegelsymmetrisch ausgebildet. An einer Oberseite des Ventilgehäuses 3 ist eine rechteckige Zugangsöffnung 19 z.B. zur Wartung ausgebildet, welche von den Stirnwänden 10 und 11 und den Seitenwänden 12 und 13 begrenzt und von einem Deckel verschliessbar ist (nicht dargestellt). Am Ventilgehäuse 3 sind an der Zugangsöffnung Klemmschrauben 20 zur lösbaren Befestigung des Deckels angeordnet. Am Rohrabschnitt 2 sowie am Rohrverjünger 7 sind Standelemente 28 ausgebildet, mit welchen das Ventil 1 auf eine Standunterlage in betriebsbereiter Ausrichtung positioniert werden kann.

Der Rohrabschnitt 2 ragt von aussen durch die Stirnwand 10 in das Ventilgehäuse 3 hinein. In einem unteren Bereich reicht der Rohrabschnitt 2 in Richtung von B im Wesentlichen durch das gesamte Ventilgehäuse 3 hindurch bis an eine Ebene der Stirnwand 11 heran. An einem Längsende ausserhalb des Ventilgehäuses 3 weist der Rohrabschnitt 2 einen Anschlussflansch 15 auf, mit welchem das Ventil 1 stromaufwärts an eine Rohrleitung (nicht dargestellt) angeschlossen werden kann.

Der Rohrverjünger 7 läuft vom Ventilgehäuse 3 weg in Längsrichtung B konisch zusammen. Die Stirnwand 11 ist über den gesamten an das Ventilgehäuse 3 anschliessenden Querschnitt des Rohrverjüngers 7 zu diesem hin offen. An der Stirnwand 11 weist der Rohrverjünger 7 einen Durchmesser senkrecht zur Längsrichtung B auf, welcher grösser ist, als ein entsprechender Durchmesser des Rohrabschnitts 2. An einem gehäusefernen Längsende weist der Rohrverjünger 7 einen Durchmesser auf, welcher dem Durchmesser des Rohrabschnitts 2 entspricht. Mit einem Anschlussflansch 16 kann der Rohrverjünger 7 an die Rohrleitung angeschlossen werden. Rohrabschnitt 2 und Rohrverjünger 7 sind koaxial im Ventil angeordnet.

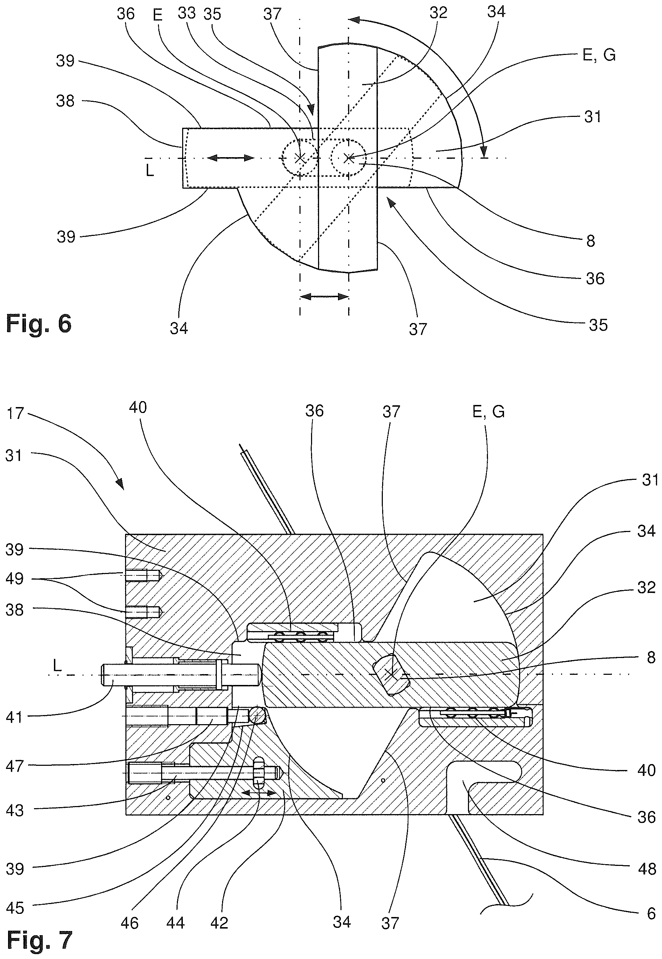

An jeder der Seitenwände 12 und 13 ist innenseitig jeweils ein Lager 17 und 18 ausgebildet. Die Lager 17 und 18 sind bezüglich der Längsebene A spiegelsymmetrisch ausgebildet und angeordnet. An jeder Seitenwand 12 und 13 ist eine Sicherheitsstütze 27 angeordnet, welche in eine Aussparung 48 des Lagers 17 bzw. 18 eingreift (siehe hierzu Fig. 7). Die Sicherheitsstütze 27 dient zur zusätzlichen Abstützung des Lagers 17 bzw. 18 am Ventilgehäuse 3 im Explosionsfall.

Der Achskörper 8 ist an den beiden Lagern 17 und 18 am Ventilgehäuse 3 gelagert. Der Achskörper 8 ragt somit stromabwärts von der Durchlassöffnung 4 quer, d.h. senkrecht zur Längsebene A, durch das Ventilgehäuse 3 hindurch. Am Achskörper 8 ist der Klappenteller 6 fest angebracht. Fig. 2 zeigt den Klappenteller in der Ruhelage, in welcher die Tellerebene D parallel zur Öffnungsebene C der Durchlassöffnung 4 des Rohrabschnitts 2 angeordnet ist. Der Klappenteller 6 ist als scheibenförmiger Körper mit einer elliptischen Fläche ausgebildet, welche einem Querschnitt der Durchlassöffnung 4 in der Öffnungsebene C entspricht.

Figur 3 zeigt eine Draufsicht auf das Ventil 1 von oben und Fig. 4 zeigt eine Schrägansicht des Ventils 1, von stromabwärts her auf die Stirnwand 5. Dabei sind Seitenwände 12 und 13, Mantelflächenabschnitt 14, Stirnwand 11, Rohrverjünger 7 der besseren Übersichtlichkeit halber nicht dargestellt.

Figur 5 zeigt eine schematische Querschnittsansicht des Klappentellers 6 in der Längsebene A in der Ruhelage (durchgezogen). Der Klappenteller 6 ist hier als Schichtkörper mit mehreren Materiallagen ausgebildet. Stromaufwärts und stromabwärts weist der Klappenteller 6 aussenseitig jeweils eine Lage 21 aus herkömmlichem Stahl auf. Zwischen den Stahllagen 21 ist eine Federstahllage 22 angeordnet. Es versteht sich, dass auch eine andere Materialwahl der Lagen 21 und 22 denkbar ist, weshalb das vorliegend beschriebene Ausführungsbeispiel nur exemplarisch zu verstehen ist.

Die Lagen 21 und 22 sind punktweise miteinander verbunden, sodass abschnittweise eine Verschiebbarkeit der Lagen 21 und 22 gegeneinander bereitgestellt ist. Die Federstahllage 22 steht randseitig in der Tellerebene D am gesamten Umfang über die Stahllagen 21 über. Die Stahllagen 21 sind dabei derart bemessen, dass sie bei paralleler Anordnung des Klappentellers 6 zur Öffnungsebene C innerhalb des Ventilsitzes 5 in die Durchlassöffnung 4 eingebracht werden können. Die Federstahllage 22 hingegen steht derart weit über, dass sie in der Schliessstellung auf dem Ventilsitz 5 zu liegen kommt. Die Federstahllage 22 stellt somit auf der Seite der Durchlassöffnung 4 die Dichtfläche 9 bereit. Auf diese Weise kann der Klappenteller 6 unter Einwirkung des Schliessdrucks gegen die Federkraft der Federstahllage 22 in die Durchlassöffnung 4 hineingedrückt werden.

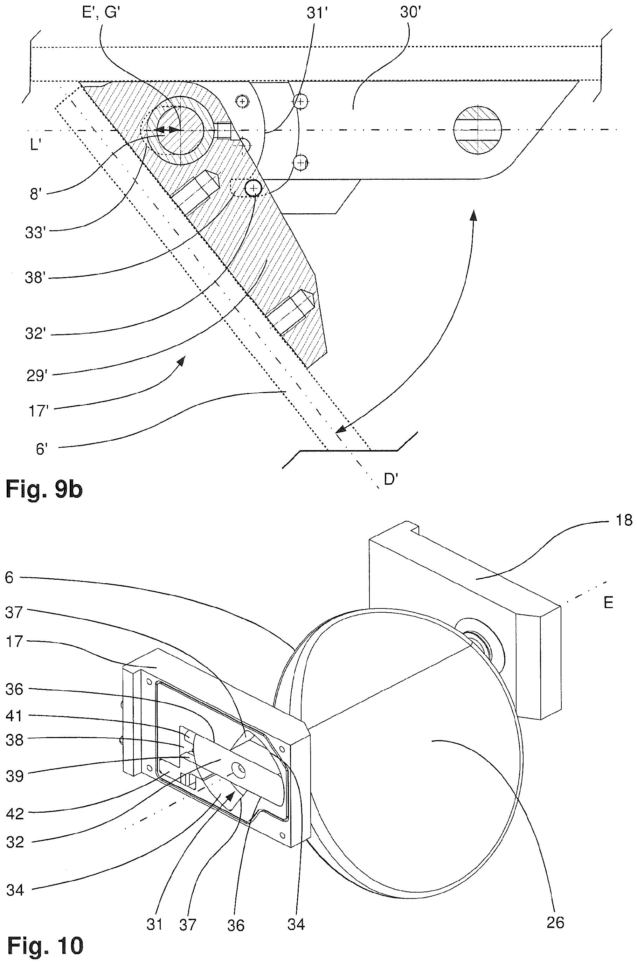

Auf einer von der Durchlassöffnung 4 in der Ruhelage abgewandten Seite weist der Klappenteller 6 Versteifungsrippen 23 auf, welche senkrecht zum Achskörper 8 bzw. der von diesem definierten geometrischen Drehachse E angeordnet sind. Die Versteifungsrippen 23 geben dem Klappenteller 6 bei leichter und Material sparender Bauweise zusätzliche mechanische Stabilität. Zur Reduktion eines Strömungswiderstandes ist der Achskörper 8 zur Tellerebene D hin abgeflacht ausgebildet. Zusätzlich kann der Klappenteller 6 einen Profilkörper 26 auf der von der Durchlassöffnung 4 abgewandten Seite aufweisen, welche z.B. den Achskörper 8 und die Versteifungsrippen 23 überdeckt (siehe hierzu auch Fig. 10). Der Profilkörper 26 kann z.B. gemäss einem Flügelprofil ausgebildet sein, sodass der Fluidstrom F zusätzlich zum Staudruck auch einen dynamischen Auftrieb erzeugt, welcher die Öffnungsbewegung in die Betriebslage unterstützt. Der Profilkörper 26 kann dabei als Profilschale ausgebildet sein.

In der Betriebsstellung (gestrichelt dargestellt), ist der obere Tellerbereich 24 zumindest teilweise in die Durchlassöffnung 4 eingeschwenkt (siehe Pfeil). Der untere Bereich ist von der Durchlassöffnung 4 weg geschwenkt. Der Tellerbereich 24 ist aufgrund der ersten Exzenterlage des Achskörpers 8 kleiner Dimensioniert, als der Tellerbereich 25. Auf diese Weise ist sichergestellt, dass der Fluidstrom F ein Öffnungsmoment auf den Klappenteller 6 ausübt. Ebenso ist sichergestellt, dass eine Explosionsdruckwelle X ein Schliessmoment erzeugt. Zudem gelangt der Klappenteller 6 aufgrund der Schwerkraftwirkung bei Abwesenheit eine Betriebs- oder Schliessdrucks in die Ruhelage.

Figur 6 zeigt schematisch eine mögliche Prinzipskizze des Lagers 17, welches die vorliegend beschriebene sequenzielle Abfolge der Beweglichkeit des Klappentellers 6 bereitstellt.

Das Lager 17 umfasst einen bevorzugt monolithischen Lagerkörper 30 (in Fig. 6 nicht dargestellt, siehe z.B. Fig. 7), in welchem eine Aussparung 31 für einen Steuerkörper 32 ausgebildet ist. Die Aussparung 31 bildet eine Drehführung für den Steuerkörper 32 mit einer geometrischen Drehachse G. Die Drehachse G fällt mit der Drehachse E des Achskörpers 8 zusammen, wenn der Steuerkörper 32 in der Drehführung geführt ist. Der Steuerkörper 32 ist als stabförmiger, weitgehend prismatischer Körper ausgebildet und zentral mit dem Achskörper 8 verbunden. Eine Längsrichtung des Steuerkörpers 32 ist dabei senkrecht zu der vom Achskörper 8 bestimmten Drehachse E angeordnet.

Der Achskörper 8 ist in einer als Langloch 33 ausgebildeten Längsführung des Lagerkörpers 30 um seine Achse E drehbar und in Längsrichtung L des Lagers 17 verschiebbar geführt gelagert. Die Längsrichtung L ist in eingebautem Zustand des Lagers 17 parallel zu B angeordnet.

Die Aussparung 31 ist von zwei bezüglich der Drehachse G gegenüberliegend angeordneten, kreiszylindrischen Mantelflächenabschnitten 34 in radialer Richtung begrenzt. Ein Abstand der Mantelflächenabschnitte 34 entspricht (mit einer Beweglichkeitstoleranz) einer radialen Länge des Steuerkörpers 32, wobei ein Krümmungsradius der halben Länge des Steuerkörpers 32 entspricht. Die Mantelflächenabschnitte 34 bilden somit ein radiales Gleitlager für Stirnseiten des Steuerkörpers 32. Die Stirnseiten des Steuerkörpers 32 sind dabei einer Krümmung der Mantelflächenabschnitte 34 entsprechend ausgebildet. Solange der Steuerkörper 32 an beide Mantelflächenabschnitte 34 anstösst, ist er in der Drehführung um die Achse G drehbar geführt gelagert. Eine Bodenfläche der Aussparung 31 bildet dabei eine Unterstützung in axialer Richtung längs G.

In der Aussparung 31 sind zwei vorliegend giebelförmige Anschläge 35 ausgebildet, welche mit einem Scheitelpunkt zur Achse G hin gerichtet in die Aussparung hineinragen. Die Anschläge 35 weisen an einer ihrer Giebelflächen jeweils eine Anschlagsfläche 36 auf, welche parallel zu der Lagerachse L ausgerichtet sind. In ihrer Flucht längs L weisen die Anschlagsflächen 36 einen Abstand auf, welcher einer radialen Breite des Steuerkörpers 32 entspricht. Die jeweils andere Giebelfläche jedes Anschlags 35 ist analog als Anschlagsfläche 37 ausgebildet, welche jedoch senkrecht zur Längsrichtung L ausgerichtet sind. Die Anschlagsflächen 36 und 37 begrenzen somit die Drehbewegung des Steuerkörpers 32 in beide Drehrichtungen um die Drehachse G auf 90 Grad.

In Längsrichtung L schliesst ein Nutabschnitt 38 an die Aussparung 31 an. Der Nutabschnitt 38 weist einen Querschnitt auf, welcher dem Querschnitt des Steuerkörpers 32 entspricht. Die seitlichen Führungsflächen 39 des Nutabschnitts 38 fluchten in Richtung von L mit den Anschlagsflächen 36, wobei eine der Führungsflächen 39 glatt in eine der Anschlagsflächen 36 übergeht.

Befindet sich der Steuerkörper 32 in einer Drehstellung, in welcher er an den Anschlagsflächen 36 anliegt, kann er somit in den Nutabschnitt 38 in der Längsrichtung L verschoben werden. Dabei wird auch der Achskörper 8 in der Längsführung 33 verschoben. Die Anschlagsflächen 36 bilden somit ein Gleitlager für die Linearbewegung des Steuerkörpers 32 (siehe hierzu auch Fig. 10). Sobald der Steuerkörper 32 in den Nutabschnitt 38 gelangt, ist er gegen eine Drehung um E blockiert. Der Nutabschnitt 38 bildet eine Linearführung des Lagers 17, welche eine lineare Beweglichkeit des Steuerkörpers 32 bereitstellt.

Figur 7 zeigt eine konkrete Umsetzung des Lagers 17 in einer Querschnittsansicht in einer Ebene parallel zur Längsebene A, welche durch das Lager 17 geht. Das Lager 18 ist bezüglich A spiegelbildlich analog aufgebaut. Für eine Beschreibung der Elemente mit den Bezugszeichen 30 bis 39 ist auf Fig. 6 verweisen.

Vorliegend sind die Anschlagsfläche 37 gegenüber der Längsrichtung L geneigt angeordnet, sodass die Drehbewegung in der Drehführung auf einen Winkel kleiner als 90 Grad beschränkt ist. An den Anschlagsflächen 36 ist jeweils ein Wälzlager 40 in der Form von in Wälzkörperkäfigen gelagerten Wälzkörpern angeordnet. Hierzu weisen die Anschlagsflächen 37 Wälzlagerbetten in der Form von Aussparungen auf. Das Wälzlager 40 bei der Anschlagsfläche 36, welche glatt in eine der Führungsflächen 39 übergeht, reicht bis in den Nutabschnitt 38 hinein. Es versteht sich, dass je nach Erfordernis keine Wälzlager vorhanden zu sein brauchen und die Anschlagflächen 36 auch als einfache Gleitlager ausgebildet sein können.

In Richtung von L ragt ein Messbolzen 41 in den Nutabschnitt 38 hinein, welcher in seiner Längsrichtung verschiebbar am Lagerkörper 30 gelagert ist. Der Messbolzen 41 bildet einen Teil einer Messvorrichtung zur Bestimmung einer Lage des Klappentellers 6. Der Bolzen 41 ist von einer Serienschaltung zweier Schraubenfedern am Lagerkörper 30 abgestützt. Der Bolzen 41 ist in der Darstellung der Fig. 7 vom Steuerkörper 32 in eine erste Messposition verschoben. Der Bolzen 41 zeigt somit eine Position des Steuerkörpers 32 an, in welcher dieser in die Linearführung eingebracht werden kann.

Wird der Steuerkörper 32 in der Drehführung gedreht, z.B. wenn der Klappenteller 6 in die Betriebsstellung gelangt, gelangt der Bolzen 41 in eine Ruheposition, in welcher er bis in die Aussparung 31 hineinragt. Wird der Steuerkörper 32 in die Linearführung, d.h. in den Nutabschnitt 38 verschoben, gelangt der Bolzen 41 in eine zweite Messposition. Aussenseitig ragt der Bolzen 41 über den Lagerkörper 30 hinaus, womit an einem äusseren Längsende des Bolzens 41 ein Verschiebezustand bzw. eine Messposition z.B. von entsprechenden Sensoren ablesbar bzw. messbar ist.

Der Mantelflächenabschnitt 34, welcher an den Nutabschnitt 38 anschliesst, ist vorliegend an einem Lagerschuh 42 ausgebildet. Ebenso ist die an diesen Mantelflächenabschnitt 34 angrenzende Führungsfläche 39 des Nutabschnitts 38 am Lagerschuh 42 ausgebildet. Der Lagerschuh 42 ist in Richtung von L verschiebbar am Lagerkörper 30 gelagert. Eine Verschiebung wird über eine Gewindespindel 43 erreicht, welche über ein Gewinde am Lagerkörper 30 abgestützt ist. Am Lagerschuh 42 ist die Gewindespindel 43 über einen Einsatz 44 des Lagerschuhs 42 drehbar in Richtung von L abgestützt. Der Einsatz 44 ist dabei lose in eine Aussparung des Lagerschuhs 42 eingesetzt.

An der am Lagerschuh 42 ausgebildeten Führungsfläche 39 ist in einer Aussparung 45 ein als Kugel 46 ausgebildeter Sperrkörper einer Verriegelungsvorrichtung angeordnet. Die Aussparung 45 weist dabei einen bezüglich L schiefen Boden auf, welcher in Verschieberichtung von L weggeneigt ist. Die Aussparung bildet somit ein Sperrkörperbett. Ein am Lagerkörper 30 abgestütztes federbeaufschlagtes Druckelement verschiebt die Kugel 46 in der Aussparung 45 in Richtung zur Drehführung hin. Der schiefe Boden der Aussparung 45 ist derart bemessen, dass die Kugel 46 in einer drehführungsnahen Position in den Nutabschnitt 38 hineinragt und in einer drehführungsfernen Position vollständig in der Aussparung 45 versenkt angeordnet ist. Wird der Steuerkörper 32 in den Nutabschnitt 38 verschoben, weicht die Kugel 46 in der Verschieberichtung aus. Bei einer Verschiebung in Gegenrichtung verkeilt die Kugel 46 hingegen zwischen Steuerkörper 32 und Lagerschuh 42. Die Kugel 46 bildet somit Teil eines Freilaufs, welcher mit dem Steuerkörper 32 derart zusammenwirkt, dass dieser gegen eine Verschiebung in der Linearführung entgegen der Schliessrichtung gesperrt ist, wenn er genügend weit in die Linearführung gelangt.

Der Lagerschuh 42 bildet Teil eine Lösevorrichtung der Verriegelungsvorrichtung. Indem der Lagerschuh 42 zur Drehführung hin verschoben wird, z.B. über Betätigung der Gewindespindel 43, kann die Verkeilung der Kugel 46 gelöst werden, wodurch der Steuerkörper 32 entgegen der Schliessrichtung in der Linearführung d.h. i, Nutabschnitt 38 verschoben werden kann.

Am Lagerkörper 30 ist zudem eine Aussparung 48 ausgebildet, in welche eine Sicherheitsstütze des Ventilgehäuses 3 eingreifen kann. Die Sicherheitsstütze ist zusätzlich zu Befestigungsmittel 49 vorgesehen, mit welchen das Lager 17 zum regulären Betrieb im Ventilgehäuse 3 befestigt ist. Im Explosionsfall wirken aufgrund des Schliessdrucks vergleichsweise grosse Kräfte auf das Lager 17. Die in der Aussparung 48 angeordnete Sicherheitsstütze nimmt dabei einen Teil dieser Kräfte auf und leitet diese in den Ventilgehäuse 3. Auf diese Weise können die Kräfte auf das Lager 17 gleichmässiger verteilt werden, ohne dass die Montage des Lagers 17 sich verkompliziert.

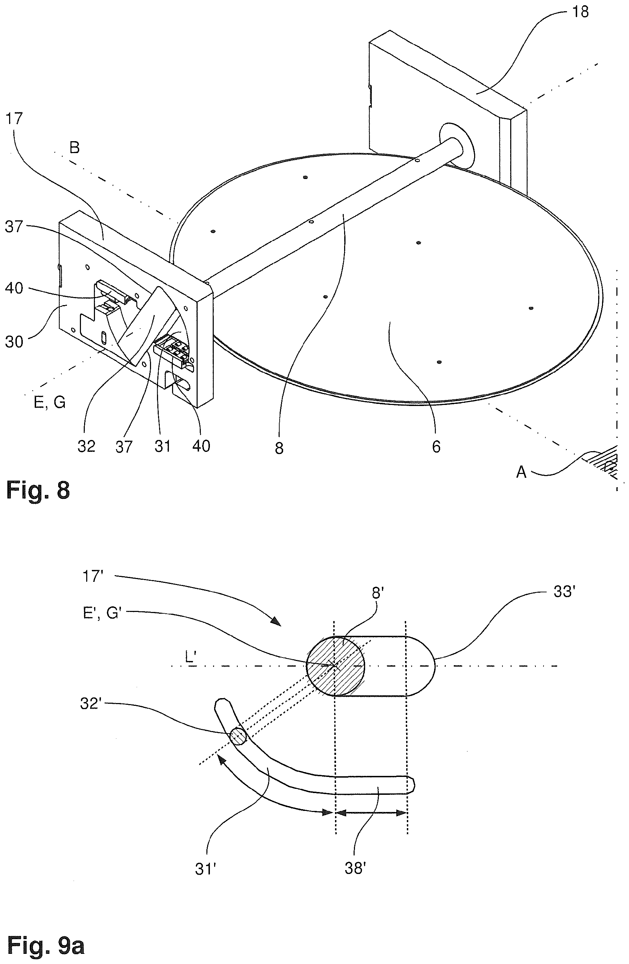

Figur 8 zeigt ausgewählte Elemente des Ventils 1, wobei der Klappenteller 6 in einer Betriebslage angeordnet ist. Der Steuerkörper 32 des Lagers 17 ist dabei bis an die Anschlagsflächen 37 in der Aussparung 31 der Drehführung um G (und um E) gedreht. In eingebautem Zustand liegt der Lagerkörper 30 mit einer Aussenseite an einer Innenseite der Seitenwand 12 an, sodass die Führungen und weiteren Bestandteile des Lagers 17 abgedeckt sind.

Figur 9a zeigt schematisch eine weitere mögliche Prinzipskizze eines Lagers 17' für ein erfindungemässes Explosionsschutzventil 1.

Ein Achskörper 8' ist in einer Längsführung 33' an einem Lagerkörper 30' (in Fig. 9a nicht dargestellt, siehe hierzu Fig. 9b) in einer Längsrichtung L' des Lagers 17' verschiebbar und um seine Längsachse E' drehbar gelagert. Ein exzentrisch zum Achskörper 8' und starr mit diesem verbundener Steuerkörper 32' ist in einer Kurvenführung 31' auf eine Teilkreisbahn um eine Drehachse G' geführt. Die Kurvenführung 31' stellt somit über den Steuerkörper 32' sicher, dass der Achskörper 8' um G' und damit in dieser Position um E' drehbar, aber nicht in der Längsführung 33' verschiebbar ist.

An die Kurvenführung 31' schliesst eine Längsführung 38' an, welche parallel zu L' und zur Längsführung 33' angeordnet ist. Sobald der Steuerkörper 32' in die Längsführung 38' gelangt, ist der Achskörper 8' gegen eine Rotation gesperrt, kann aber in der Längsführung 33' in Längsrichtung L' verschoben werden.

Die Kurvenführung 31' stellt somit eine Drehführung im Sinne der Erfindung bereit, während die Längsführung 38' entsprechend eine Linearführung bildet. Die Drehbewegung und die Linearbewegung eines starr mit dem Achskörper 8' verbundenen Klappentellers 6' (in Fig. 9a nicht dargestellt, siehe Fig. 9b) kann somit nur aufeinander folgend erfolgen.

Figur 9b zeigt eine konkrete Ausführungsform des Lagers 17'. Die Kurvenführung 31' ist vorliegend als Steuerfläche al Lagerkörper 30' ausgebildet, welche nur eine einseitige Führungsfläche für den Steuerkörper 32' bildet. Die Längsführung 38' ist hingegen als beidseitig wirkende Führungsnut ausgebildet. Der Klappenteller 6' ist über einen Lagerbock 29' mit dem Achskörper 8' verbunden. Der Steuerkörper 32' ist fest am Lagerbock 29' angebracht.

Figur 10 zeigt eine weitgehend der Fig. 8 entsprechende Ansicht des Explosionsschutzventils 1, wobei die Anschlagflächen 36 der Lager 17 und 18 als Gleitflächen für den Steuerkörper 32 ausgebildet sind. In der Darstellung der Fig. 10 ist zudem der Lagerschuh 42 derart ausgebildet, dass der Mantelflächenabschnitt 34 nur teilweise am Lagerschuh 42 angeordnet ist. Der übrige, nicht am Lagerschuh 42 angeordnete, Abschnitt 34, ist am Lagerkörper 30 ausgebildet. Weiter weist der Klappenteller 6 gemäss der Fig. 10 den Profilkörper 26 auf (siehe hierzu Fig. 5), welcher auf einer in der Ruhelage stromabwärts angeordneten Seite des Klappentellers 6 angeordnet ist. Zudem befindet sich der Klappenteller im Gegensatz zu der Darstellung der Fig. 8 in der Ruhelage.

## Patentansprüche

1. Explosionsschutzventil (1), insbesondere eine Rückschlagklappe zur explosionstechnischen Entkopplung, zum Unterbrechen eines Fluidstroms (F), insbesondere in einer Rohrleitung, umfassend
- ein Ventilgehäuse (3) mit einer Durchlassöffnung (4) zum Durchtritt des Fluidstroms (F) und einen bei der Durchlassöffnung (4) angeordneten Ventilsitz (5),
- einen Schliesskörper (6), insbesondere einen Klappenteller (6), mit einer Dichtfläche (9), wobei
- der Schliesskörper (6) derart beweglich im Ventilgehäuse (3) an einem Lager (17, 17') gelagert ist, dass er wenigstens zwischen einer Ruhelage, einer Betriebslage und einer Schliesslage beweglich ist, wobei
- sich der Schliesskörper (6) bei Abwesenheit des Fluidstroms (F) in der Ruhelage befindet, in der Betriebslage die Durchlassöffnung (4) vom Schliesskörper freigegeben ist und in der Schliesslage die Durchlassöffnung (4) vom Schliesskörper (6) verschlossen ist, wobei der Schliesskörper (6) in der Schliesslage mit der Dichtfläche (9) am Ventilsitz (5) anliegt, wobei
- der Schliesskörper (6) unter Einwirkung eines Betriebsdrucks in die Betriebslage bewegbar ist und unter Einwirkung von einem vom Betriebsdruck abweichenden Schliessdruck in die Schliesslage bewegbar ist, wobei
- der Schliesskörper (6), bevorzugt selbsttätig, mittels einer Verriegelungsvorrichtung in der Schliesslage arretierbar ist, **dadurch gekennzeichnet, dass**
- das Lager (17, 17') des Schliesskörpers (6) derart ausgebildet ist, dass der Schliesskörper (6) in einer Schliessrichtung aus der Betriebslage in die Schliesslage mittels einer Drehbewegung und einer Linearbewegung beweglich ist,
wobei das Lager (17, 17') derart ausgebildet ist, dass der Schliesskörper (6) zum Übergang aus der Betriebslage in die Schliesslage zunächst in der Drehbewegung und in der Folge in der Linearbewegung beweglich ist, wobei bevorzugt eine Lage des Schliesskörpers (6) beim Übergang von der Drehbewegung zur Linearbewegung der Ruhelage entspricht, wobei der Schliesskörper (6) über einen Achskörper (8, 8') an dem Lager (17, 17') gelagert ist, wobei bevorzugt ein zweites, spiegelbildlich ausgebildetes Lager (18, 18') vorhanden ist und die beiden Lager (17, 17', 18, 18') beidseitig der Durchlassöffnung (4) parallel zueinander angeordnet sind, wobei der Schliesskörper (6) an beiden Lagern (17, 17', 18, 18') gelagert ist,
wobei das Lager (17, 17') eine Drehführung sowie eine Linearführung für einen über den Achskörper (8, 8'), starr mit dem Schliesskörper (6) verbundenen Steuerkörper (32, 32') umfasst, wobei das Lager (17, 17') zusätzlich eine Längsführung (33, 33') umfasst, in welcher der Achskörper (8, 8') drehbar und verschiebbar geführt ist, wobei eine Verschieberichtung der Längsführung (33, 33') parallel zu der Verschieberichtung der Linearführung für den Steuerkörper (32, 32') ist.

2. Explosionsschutzventil (1) gemäss Anspruch 1, **dadurch gekennzeichnet, dass** die Dichtfläche (9) des Schliesskörpers (6) und der Ventilsitz (5) eben ausgebildet sind und zueinander planparallel ausgerichtet sind, wenn der Schliesskörper (6) in der Linearbewegung beweglich ist.

3. Explosionsschutzventil (1) gemäss einem der vorhergehenden Anspruche **dadurch gekennzeichnet, dass** der Steuerkörper (32, 32') zentrisch bezüglich des Achskörpers (8, 8') angeordnet ist.

4. Explosionsschutzventil (1) gemäss einem der vorhergehenden Ansprüche, **dadurch gekennzeichnet, dass** die Drehführung und die Linearführung derart ausgebildet und zueinander angeordnet sind, dass der Steuerkörper (32, 32') nur in einer vorgegebenen Drehstellung aus der Drehführung in die Linearführung einbringbar ist.

5. Explosionsschutzventil (1) gemäss Anspruch 4, **dadurch gekennzeichnet, dass** die Drehführung eine Aussparung (31) aufweist, in welcher der Steuerkörper (32, 32'), in radialer und/oder in axialer Richtung geführt, zumindest teilweise um eine von der Drehführung definierte geometrische Drehachse (G, G') drehbar ist.

6. Explosionsschutzventil (1) gemäss Anspruch 5, **dadurch gekennzeichnet, dass** die Aussparung (31) bezüglich der geometrischen Drehachse (G, G') in radialer Richtung zumindest teilweise von kreiszylindrischen Mantelflächenabschnitten (34) mit einem Krümmungsradius begrenzt ist, welcher einer halben radialen Dimension des Steuerkörpers (32, 32') entspricht.

7. Explosionsschutzventil (1) gemäss einem der Ansprüche 5 oder 6, **dadurch gekennzeichnet, dass** die Linearführung einen Nutabschnitt (38) umfasst, welcher in radialer Richtung an die Aussparung (31) anschliesst und in welche der Steuerkörper (32, 32') in der Verschieberichtung der Linearführung aus der Aussparung (31) der Drehführung verschiebbar ist.

8. Explosionsschutzventil (1) gemäss einem der Ansprüche 5 bis 7, **dadurch gekennzeichnet, dass** in der Aussparung (31) wenigstens ein Anschlagselement (35) mit einer Anschlagsfläche (36) ausgebildet ist, welche die Drehbewegung des Steuerkörpers (32, 32') in der Aussparung (31) derart begrenzt, dass der Steuerkörper (32, 32') in die Linearführung verschiebbar ist, wenn er an der Anschlagsfläche (36) anliegt, wobei insbesondere gegebenenfalls die Anschlagsfläche (36) mit einer Führungsfläche (39) des Nutabschnitts (38) fluchtet.

9. Explosionsschutzventil (1) gemäss einem der vorhergehenden Ansprüche **dadurch gekennzeichnet, dass** die Verriegelungsvorrichtung einen Freilauf umfasst, welcher die Beweglichkeit des Schliesskörpers (6) in Schliessrichtung erlaubt und in Gegenrichtung sperrt, zumindest wenn der Schliesskörper (6) in der Schliessstellung ist.

10. Explosionsschutzventil (1) gemäss einem der vorhergehenden Ansprüche, **dadurch gekennzeichnet, dass** die Durchlassöffnung (4) als endseitige Öffnung eines wenigstens teilweise im Ventilgehäuse (3) angeordneten Rohrstutzens (2) ausgebildet ist und eine im Ventilgehäuse (3) angeordnete Stirnfläche des Rohrstutzens (2) den Ventilsitz (5) bildet.

11. Explosionsschutzventil (1) gemäss einem der vorhergehenden Ansprüche, **dadurch gekennzeichnet, dass** der Schliesskörper (6) als, insbesondere wenigstens einseitig ebener, Klappenteller (6) ausgebildet ist.

## Claims

1. Explosion protection valve (1), in particular a non-return flap for explosion decoupling, for interrupting a fluid flow (F), in particular in a pipeline, comprising
- a valve housing (3) with a passage opening (4) for the passage of the fluid flow (F) and a valve seat (5) arranged at the passage opening (4),
- a closing body (6), in particular a flap plate (6), with a sealing surface (9), wherein
- the closing body (6) is mounted movably in the valve housing (3) on a bearing (17, 17') in such a way that it is movable at least between a rest position, an operating position and a closing position, wherein
- the closing body (6) is in the rest position in the absence of the fluid flow (F), in the operating position the passage opening (4) is opened by the closing body and in the closed position the passage opening (4) is closed by the closing body (6), the closing body (6) in the closed position resting with the sealing surface (9) against the valve seat (5), wherein
- the closing body (6) is movable into the operating position under the action of an operating pressure and is movable into the closing position under the action of a closing pressure differing from the operating pressure, wherein
- the closing body (6) is arrestable, preferably automatically, in the closed position by means of a locking device, **characterised in that**
- the bearing (17, 17') of the closing body (6) is designed in such a way that the closing body (6) is movable in a closing direction from the operating position into the closing position by means of a rotary movement and a linear movement,
wherein the bearing (17, 17') is designed in such a way that the closing body (6) for transition from the operating position to the closing position is movable first in the rotary movement and subsequently in the linear movement, wherein preferably one position of the closing body (6) corresponds to the rest position during transition from the rotary movement to the linear movement, the closing body (6) being mounted on the bearing (17, 17') via an axle body (8, 8'), preferably a second, mirror-inverted bearing (18, 18') being present and the two bearings (17, 17', 18, 18') being arranged parallel to one another on both sides of the passage opening (4), the closing body (6) being mounted on both bearings (17, 17', 18, 18'),
wherein the bearing (17, 17') comprises a rotary guide and a linear guide for a control body (32, 32') rigidly connected to the closing body (6) via the axle body (8, 8'), wherein the bearing (17, 17') additionally comprises a longitudinal guide (33, 33') in which the axle body (8, 8') is rotatably and displaceably guided, wherein a displacement direction of the longitudinal guide (33, 33') is parallel to the displacement direction of the linear guide for the control body (32, 32').

2. Explosion protection valve (1) according to claim 1, **characterized in that** the sealing surface (9) of the closing body (6) and the valve seat (5) are formed flat and are aligned plane-parallel to one another when the closing body (6) is movable in the linear movement.

3. Explosion protection valve (1) according to one of the preceding claims, **characterized in that** the control body (32, 32') is arranged centrally with respect to the axle body (8, 8').

4. Explosion protection valve (1) according to one of the preceding claims, **characterized in that** the rotary guide and the linear guide are designed and arranged relative to one another in such a way that the control body (32, 32') is only introducible out of the rotary guide into the linear guide in a predetermined rotary position.

5. Explosion protection valve (1) according to claim 4, **characterized in that** the rotary guide has a recess (31) in which the control body (32, 32'), guided in the radial and/or axial direction, is at least partially rotatable about a geometric axis of rotation (G, G') defined by the rotary guide.

6. Explosion protection valve (1) according to claim 5, **characterized in that** the recess (31) is at least partially bounded in the radial direction with respect to the geometric axis of rotation (G, G') by circular cylindrical surface sections (34) with a radius of curvature which corresponds to half a radial dimension of the control body (32, 32').

7. Explosion protection valve (1) according to one of claims 5 or 6, **characterized in that** the linear guide comprises a groove portion (38) which is connected in the radial direction to the recess (31) and into which the control body (32, 32') is displaceable in the displacement direction of the linear guide out of the recess (31) of the rotary guide.

8. Explosion protection valve (1) according to one of claims 5 to 7, **characterised in that** in the recess (31) at least one stop element (35) is formed with a stop surface (36) which limits the rotational movement of the control body (32, 32') in the recess (31) in such a way that the control body (32, 32') is displaceable into the linear guide when it abuts the stop surface (36), wherein in particular, if necessary, the stop surface (36) is aligned with a guide surface (39) of the groove section (38).

9. Explosion protection valve (1) according to one of the preceding claims **characterized in that** the locking device comprises a free wheel which allows the movement of the closing body (6) in the closing direction and blocks it in the opposite direction, at least when the closing body (6) is in the closed position.

10. Explosion protection valve (1) according to one of the preceding claims, **characterized in that** the passage opening (4) is designed as an end opening of a pipe socket (2) arranged at least partially in the valve housing (3) and an end face of the pipe socket (2) arranged in the valve housing (3) forms the valve seat (5).

11. Explosion protection valve (1) in accordance with one of the preceding claims, **characterized in that** the closing body (6) is constructed as a flap plate (6), in particular flat on at least one side.

## Revendications

1. Vanne à fermeture rapide contre les explosions (1), en particulier un clapet anti-retour pour le découplage des explosions, pour interrompre un écoulement de fluide (F), en particulier dans une canalisation, comprenant
- un boîtier de soupape (3) avec une ouverture de passage (4) pour le passage du flux de fluide (F) et un siège de soupape (5) disposé à l'ouverture de passage (4),
- un corps de fermeture (6), en particulier une plaque de clapet (6), avec une surface d'étanchéité (9), dans lequel
- le corps de fermeture (6) est monté de manière mobile dans le boîtier de soupape (3) sur un palier (17, 17') de telle sorte qu'il est mobile au moins entre une position de repos, une position de fonctionnement et une position de fermeture, dans laquelle
- le corps de fermeture (6) se trouve en position de repos en l'absence du flux de fluide (F), en position de fonctionnement l'ouverture de passage (4) est ouverte par le corps de fermeture et en position fermée l'ouverture de passage (4) est fermée par le corps de fermeture (6), le corps de fermeture (6) en position fermée reposant avec la surface d'étanchéité (9) contre le siège de soupape (5), dans lequel
- le corps de fermeture (6) est déplaçable en position de fonctionnement sous l'action d'une pression de fonctionnement et déplaçable en position de fermeture sous l'action d'une pression de fermeture différente de la pression de fonctionnement, dans laquelle
- le corps de fermeture (6) est arrêtable, de préférence automatiquement, en position fermée au moyen d'un dispositif de verrouillage, **caractérisé en ce que**
le palier (17, 17') de le corps de fermeture (6) est conçu de telle sorte que le corps de fermeture (6) est déplaçable dans le sens de la fermeture de la position de fonctionnement à la position de fermeture par un mouvement rotatif et un mouvement linéaire,
le palier (17, 17') étant conçu de telle sorte que le corps de fermeture (6), pour le passage de la position de fonctionnement à la position de fermeture, est mobile d'abord dans le mouvement de rotation et ensuite dans le mouvement linéaire, une position du corps de fermeture (6) correspondant de préférence à la position de repos lors du passage du mouvement de rotation au mouvement linéaire, le corps de fermeture (6) étant monté sur le palier (17, 17') par l'intermédiaire d'un corps d'essieu (8, 8'), de préférence un deuxième palier (18, 18') inversé en miroir, et les deux paliers (17, 17', 18, 18') étant disposés parallèlement l'un à l'autre des deux côtés de l'ouverture de passage (4), le corps de fermeture (6) étant monté sur les deux paliers (17, 17', 18, 18'),
dans lequel le palier (17, 17') comprend un guidage rotatif et un guidage linéaire pour un corps de commande (32, 32') relié rigidement au corps de fermeture (6) par l'intermédiaire du corps d'essieu (8, 8'), dans lequel le palier (17, 17') comprend en outre un guidage longitudinal (33, 33') dans lequel le corps d'essieu (8, 8') est guidé en rotation et en translation, dans lequel une direction de translation du guidage longitudinal (33, 33') est parallèle à la direction de translation du guidage linéaire pour le corps de commande (32, 32').

2. Vanne à fermeture rapide contre les explosions (1) selon la revendication 1, **caractérisée en ce que** la surface d'étanchéité (9) du corps de fermeture (6) et le siège de soupape (5) sont formés à plat et sont alignés dans des plans parallèles l'un à l'autre lorsque le corps de fermeture (6) est mobile dans le mouvement linéaire.

3. Vanne à fermeture rapide contre les explosions (1), selon l'une des revendications précédentes, **caractérisée en ce que** le corps de commande (32, 32') est disposé de manière centrale par rapport au corps d'essieu (8, 8').

4. Vanne à fermeture rapide contre les explosions (1), selon l'une des revendications précédentes, **caractérisée en ce que** le guide rotatif et le guide linéaire sont conçus et disposés l'un par rapport à l'autre de telle manière que le corps de commande (32, 32') n'est déplaçable du guide rotatif dans le guide linéaire que dans une position de rotation prédéterminée.

5. Vanne à fermeture rapide contre les explosions (1), selon la revendication 4, **caractérisée en ce que** le guide rotatif présente un évidement (31) dans lequel le corps de commande (32, 32'), guidé dans la direction radiale et/ou axiale, est rotatif au moins partiellement autour d'un axe géométrique de rotation (G, G') défini par le guide rotatif.

6. Vanne à fermeture rapide contre les explosions (1), selon la revendication 5, **caractérisée en ce que** l'évidement (31) est au moins partiellement délimité dans la direction radiale par rapport à l'axe de rotation géométrique (G, G') par des sections de surface cylindriques circulaires (34) avec un rayon de courbure qui correspond à la moitié d'une dimension radiale du corps de commande (32, 32').

7. Vanne à fermeture rapide contre les explosions (1), selon l'une des revendications 5 ou 6, **caractérisée en ce que** le guide linéaire comprend une section de rainure (38) qui est reliée dans la direction radiale à l'évidement (31) et dans laquelle le corps de commande (32, 32') est déplaçable dans la direction de déplacement du guide linéaire hors de l'évidement (31) du guide rotatif.

8. Vanne à fermeture rapide contre les explosions (1), selon l'une des revendications 5 à 7, **caractérisée en ce que** dans l'évidement (31), au moins un élément de butée (35) est formé avec une surface de butée (36) qui limite le mouvement de rotation du corps de commande (32, 32') dans l'évidement (31) de telle sorte que le corps de commande (32, 32') est déplaçable dans le guidage linéaire lorsqu'il s'appuie sur la surface de butée (36), la surface de butée (36) étant en particulier, si nécessaire, alignée avec une surface de guidage (39) de la section de rainure (38).

9. Vanne à fermeture rapide contre les explosions (1), selon l'une des revendications précédentes **caractérisée en ce que** le dispositif de verrouillage comprend une roue libre qui permet le mouvement du corps de fermeture (6) dans la direction de fermeture et le bloque dans la direction opposée, au moins lorsque le corps de fermeture (6) est en position fermée.

10. Vanne à fermeture rapide contre les explosions (1), selon l'une des revendications précédentes, **caractérisée en ce que** l'ouverture de passage (4) est conçue comme une ouverture d'extrémité d'un manchon tubulaire (2) disposé au moins partiellement dans le boîtier de la soupape (3) et une face frontale du manchon tubulaire (2) disposé dans le boîtier de la soupape (3) forme le siège de la soupape (5).

11. Vanne à fermeture rapide contre les explosions (1), selon l'une des revendications précédentes, **caractérisée en ce que** le corps de fermeture (6) est réalisé sous forme de plaque à clapet (6), en particulier à plat sur au moins un côté.
